(19) Europäisches Patentamt
European Patent Office
Office européen des brevets

(11) **EP 2 053 884 A2**

(12) **EUROPEAN PATENT APPLICATION**

(43) Date of publication:
**29.04.2009 Bulletin 2009/18**

(51) Int Cl.:
*H04W 16/18* (2009.01)

(21) Application number: **09153095.6**

(22) Date of filing: **06.01.2005**

(84) Designated Contracting States:
**AT BE BG CH CY CZ DE DK EE ES FI FR GB GR HU IE IS IT LI LT LU MC NL PL PT RO SE SI SK TR**

(30) Priority: **08.01.2004 US 534854 P**
**08.01.2004 US 535043 P**
**08.01.2004 US 535022 P**
**26.08.2004 US 926892**
**08.09.2004 US 935942**
**20.12.2004 US 18112**

(62) Document number(s) of the earlier application(s) in accordance with Art. 76 EPC:
**05711269.0 / 1 704 659**

(71) Applicant: **INTERDIGITAL TECHNOLOGY CORPORATION**
**Wilmington, DE 19801 (US)**

(72) Inventors:
• **Marinier, Paul**
**Brossart Québec J4X 2J7 (CA)**
• **Cuffaro, Angelo**
**Laval Québec H7E 5M7 (CA)**
• **Cave, Christopher**
**Candiac Québec J5R 4W7 (CA)**
• **Roy, Vincent**
**Monreal Québec H2S 2EI (CA)**

(74) Representative: **Ahrengart, Kenneth**
**Awapatent AB**
**P.O. Box 45086**
**104 30 Stockholm (SE)**

Remarks:
This application was filed on 18-02-2009 as a divisional application to the application mentioned under INID code 62.

(54) **Improvement of power control of an access point**

(57) A wireless communication method and apparatus for optimizing the performance of an access point (AP) for reliably communicating with at least one wireless transmit/receive unit (WTRU) in a wireless communication system. In one embodiment, the coverage area of an AP is autonomously determined. In another embodiment the loads of an AP are balanced. In yet another embodiment, the transmission power level of an AP is determined and/or controlled.

FIG. 12

**Description**

FIELD OF INVENTION

The present invention relates to a wireless communication system including a plurality of access points (APs). More particularly, the present invention relates to a method and apparatus for optimizing the performance of the APs by autonomously determining AP coverage areas, balancing AP loads and controlling AP transmission power levels.

BACKGROUND

A wireless communication system is supported by a set of APs deployed in a given environment. Each AP can provide wireless services to wireless transmit/receive units (WTRUs) within its coverage area. The coverage area of an AP depends on several factors, such as the transmission power of the AP and WTRUs, the sensitivities of the receivers of the AP and WTRUs, and the characteristics of the propagation environment. For the purpose of optimizing the performance of the system, it is often desirable to reduce, to a certain extent, the coverage area of each AP compared to the maximum possible area given the radio specifications (e.g. maximum transmission power) of the AP or WTRU equipment.

When it is required that a wireless communication system provide contiguous coverage within the environment where it is deployed, the minimum coverage areas of the APs are primarily dependent on the relative positioning of the set of APs supporting the system. For example, if a set of APs are located close to each other, each AP may be meant to cover a relatively small area. On the other hand, if a set of APs are located far away from each other, each AP has to cover a relatively large area in order to provide contiguous coverage.

In a wireless communication system comprising a set of APs, a number of parameters in each AP need to be configured, such as (but not limited to) the transmission power of the AP and the WTRUs served by the AP, or possibly the energy detect thresholds (EDT) used in the clear channel assessment (CCA) function of the AP and/or the WTRUs. The proper configuration of these parameters depends in general on the desired coverage area of each AP.

One possible way of configuring various parameters of an AP is to start by specifying the desired coverage area of the AP. A problem is that this approach is not very practical in realistic deployment scenarios, as it would impose that the installer of the wireless communication system manually estimate and enter the desired coverage area of each AP. This can be a tedious process, since the minimum coverage area of each AP is dependent on the relative locations of the set ofAPs deployed in the environment, (if contiguous coverage is a requirement). This means that every time an AP is relocated, added to, or removed from the environment, the desired coverage areas of all surrounding APs need to be re-estimated and re-entered.

The coverage area or Range, of an AP may be specified in terms of a maximum path loss. WTRUs whose path loss to an AP is equal or inferior to the Range are said to be within the coverage area of the AP. It should be noted that due to the irregular nature of the wireless environment resulting in shadowing and fading, the coverage area of an AP generally does not have a regular shape when it is specified in terms of a Range.

It would be desirable that each AP be capable of autonomously determining its desired coverage area, (defined in terms of the Range), when installed in an environment where other APs are deployed, without the need for manual configuration or reconfiguration when the particular AP or other surrounding APs are added to, relocated within, or removed from the system.

Wireless local area networks (WLANs) have become more popular because of their convenience and flexibility. Such networks typically include an AP and a plurality of WTRUs which wirelessly communicate with one another.

As new applications for such networks are being developed, their popularity is expected to significantly increase. Institute of Electrical and Electronics Engineers (IEEE) working groups have defined an IEEE 802.11 baseline standard having extensions which are intended to provide higher data rates and other network capabilities.

In an environment where several APs are deployed, a WTRU may potentially associate (i.e., communicate) with any particular AP from which it receives and decodes a beacon packet and other types of packets, such as probe responses or the like. However, situations often occur where a number ofWTRUs are located in the vicinity of a particular AP. For example, an AP located in a conference room full of WTRU users attempting to access the wireless medium would become overloaded and thus provide significantly degraded services, (in terms of throughput and delay), to the WTRU users.

A method and system for preventing an AP from being overloaded when it is in the vicinity of too many WTRU users is desired.

In accordance with the IEEE 802.11 baseline standard, WLANs use a carrier-sense multiple access/collision avoidance (CSMA/CA) medium access scheme in which the WTRU's transmissions are not distinguished from each other by means of different modulation codes. Rather, each WTRU, (and AP), transmits packets containing the sender and destination addresses in their headers. In order to avoid reception errors, the WTRUs attempt to avoid transmitting simultaneously by sensing the wireless medium prior to transmitting.

The goal of the power control process is to determine the transmission power of an AP to the most appropriate value. The power control process must adequately serve associated WTRUs that are within a certain region (coverage area) around the AP, taking into account possible interference experienced by these WTRUs. This may be accomplished by determining the minimum power level at which the AP transmission power. Furthermore, the power control process must minimize the interference to WTRUs and APs in neighboring Base Service Sets (BSSs) which results in an excessive number of lost packets and/or deferrals in these BSSs. This may be accomplished by selecting a power level between the minimum power level and a maximum power level.

A method and system for reliably and accurately determining the minimum power level of AP transmissions is desired.

SUMMARY

The present invention is related to a wireless communication method and apparatus for optimizing the performance of APs by autonomously determining AP coverage areas, balancing AP loads and controlling AP transmission power levels. The apparatus may be a wireless communication system, an AP, a WTRU or an integrated circuit (IC).

In one embodiment, the coverage area of each of a plurality of APs in a wireless communication system is autonomously determined. Each of a plurality of APs transmits loud packets to, and receives loud packets from, other APs. Each AP measures the received power of the loud packets received from the other APs. Each AP estimates path losses from the other APs using these measurements and calculates the range of the AP from the estimated path losses of the other APs.

In another embodiment, a baseline range parameter of a particular one of the APs is obtained. The load of an AP within its intended coverage area is estimated and compared to different thresholds. The load on channels not used by the AP is also estimated and compared to different thresholds. A processor performs a load balancing process by adjusting the range of the AP coverage area depending on the results of these comparisons. The range of the AP is increased if the load of this AP is below a threshold while the channel utilization on one of the other channels is above a threshold. The range of the AP is decreased if the load of this AP is above a threshold while the channel utilization on the other channels is above a threshold. The threshold values used may be different.

In order to maintain satisfactory performance within the coverage area of the APs, the transmission power levels of the APs are determined by summing their respective AP range adjustments with required received power (RRP) values associated with the minimum power level at which a particular type of packet transmitted by a respective AP is expected to be successfully received by a respective WTRU. The range (i.e., transmission power level) of APs with light loads is increased if the load on at least one other channel (used by other APs) is heavy, and the range of APs with heavy loads is decreased if the load on the other channels (used by other APs) is light.

Optionally, if any particular one of the WTRUs is determined to have an out-of-range status, the particular WTRU may be disassociated with its current serving AP, and any association request received from the particular WTRU is denied. The present invention may be implemented in a WLAN.

The present invention is particularly useful when applied to establishing power levels and range adjustments on systems with multiple APs, and may be used in systems which utilize data hot spots to communicate a large amount of data through localized APs.

In yet another embodiment, the minimum transmission power level of an AP is determined for reliably communicating with at least one WTRU in a wireless communication system. The apparatus obtains the range of the AP and estimates the interference to the AP by executing a slow interference estimation process and a fast interference estimation process. A required received power (RRP) of the WTRU is obtained from the interference estimate. The minimum transmission power level of the AP is determined by summing the range of the AP and the RRP.

BRIEF DESCRIPTION OF THE DRAWING(S)

A more detailed understanding of the invention may be had from the following description, given by way of example and to be understood in conjunction with the accompanying drawings wherein:

Figure 1 is a block diagram of a wireless communication system comprising a set of APs;

Figure 2 is a flow diagram of a path loss discovery process for setting a Range of an AP in accordance with the present invention;

Figure 3 is a flow diagram of a process for managing the generation of loud packets in accordance with the present invention;

Figure 4 is a flow diagram of a process for detecting path losses during one path loss detection period in accordance with the present invention;

Figure 5 is a flow diagram of a process for estimating path loss in accordance with the present invention;

Figure 6 is a flow diagram of a process of calculating a Range of the listening AP from the estimates of path losses in accordance with the present invention;

Figure 7 is a block diagram of an AP configured to autonomously determine the coverage in accordance with the present invention;

Figure 8 shows the parameters used by a power control process to determine the transmission power level of an AP in accordance with one embodiment of the present invention;

Figure 9 is a flow diagram of a power control process in accordance with the present invention;

Figure 10 is a diagram of the application of load balancing in accordance with the present invention;

Figure 11 is a flow diagram of performing a range adjustment in accordance with the present invention;

Figure 12 is a block diagram of a wireless communication system in accordance with the present invention;

Figure 13 is a flowchart of a power control process for determining the minimum transmission power of an AP in the system of Figure 12;

Figure 14 is a flowchart of a slow interference estimation process used by the power control process in accordance with the present invention; and

Figure 15 is a flowchart of a fast interference estimation process used by the power control process in accordance with the present invention.

DETAILED DESCRIPTION OF THE PREFERRED EMBODIMENT(S)

Hereafter, the terminology "WTRU" includes but is not limited to a user equipment (UE), mobile station, a wireless LAN station, a fixed or mobile subscriber unit, pager, or any other type of device capable of operating in a wireless environment.

When referred to hereafter, the terminology "AP" includes but is not limited to a Node-B, a site controller, a base station or any other type of interfacing device in a wireless environment. The invention is particularly applicable to wireless local area networks (WLAN).

The features of the present invention may be incorporated into an integrated circuit (IC) or be configured in a circuit comprising a multitude of interconnecting components.

The present invention will be described with reference to the drawing figures wherein like numerals represent like elements throughout. The present invention applies as an add-on to the WLAN IEEE 802.11 standards (802.11 baseline, 802.11a, 802.11b, and 802.11g), and also applies to IEEE 802.11e, 802.11h and 802.16.

The present invention may be further applicable to Time Division Duplex (TDD), Frequency Division Duplex (FDD), and Time Division Synchronous CDMA (TD-SCDMA), as applied to a Universal Mobile Telecommunications System (UMTS), CDMA 2000 and CDMA in general, but is envisaged to be applicable to other wireless systems as well.

The features of the present invention may be incorporated into an IC or be configured in a circuit comprising a multitude of interconnecting components.

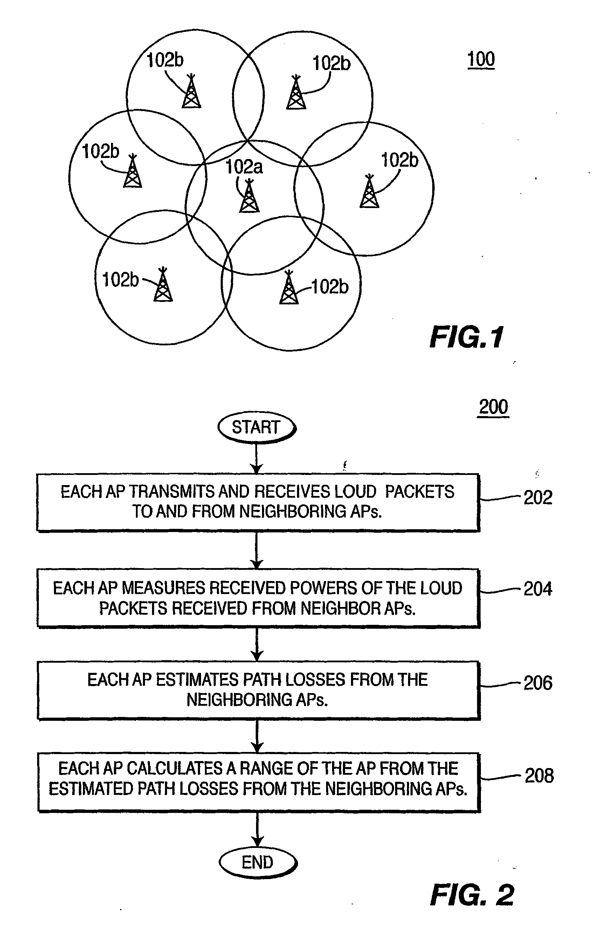

Figure 1 is a block diagram of a wireless communication system 100 comprising a plurality of APs 102. Each AP 102 estimates the path losses between itself and other APs based on measurements of received power of packets transmitted by other APs. Hereinafter, for simplicity of explanation, an AP performing this estimation will be referred to as a "listening AP", (designated as AP 102a); and other APs will be referred to hereinafter as "neighboring APs", designated as APs 102b. However, the different designations are for convenience only and those of skill in the art should realize that all of the APs 102a,102b are the same and perform the same functions.

The measurements are performed on all received packets including packets known as "loud packets." The loud packets are identical to other packets except that they are transmitted at maximum power. A listening AP does not exclusively measure loud packets, because it cannot necessarily differentiate the loud packets from other packets. The loud packets are not directed to a specific AP at a specific time. Loud packets are transmitted intermittently and may be used by all neighboring APs.

The AP collects the received powers of all packets it can receive (loud and non-loud) during a certain period and stores in memory the power levels values of the N strongest packets $N_{srp}$. If the various parameters are set properly, statistically there is a strong probability that the $N_{srp}$ were in fact loud packets and the path loss estimation based on the assumption that these packets were transmitted at max power will be accurate. This method has the advantage that there is no need for adding a new "field" to the loud packets for the purpose of identifying them as loud packets.

In an alternative embodiment, loud packets may be identified by a special field. In this alternative, the listening AP identifies the loud packets by reading this field and only takes into account these loud packets for the purpose of path loss estimation. The power level used for transmitting a loud packet may be included in the loud packet. The listening AP would then directly estimate the path loss by subtracting the received power of the packet from the signaled transmission power.

Figure 2 is a flow diagram of a path loss discovery process 200 for setting the Range of an AP 102a in accordance with the present invention. In accordance with the path loss determination process 200, a listening AP 102a continuously estimates the path losses to neighboring APs 102b and establishes the Range of the listening AP 102a based on the path loss estimates. Each AP 102a, 102b intermittently transmits loud packets at the maximum power level in order to facilitate the estimation of path losses between the listening AP 102a and neighboring APs 102b (step 202). A listening AP 102a measures and collects the received powers of packets received from neighboring APs 102b (step 204). Path losses from the neighboring APs 102b are estimated based upon the collected received power measurements (step 206). The listening AP 102a then calculates its Range from the estimated path losses to neighboring APs 102b (step 208).

The packets received by the listening AP 102a do not, in general, contain information destined for the listening AP 102a. In other words, the packets sent by the neighboring APs 102b are not destined in general to the listening AP 102a, but rather are packets sent to all WTRUs associated with the neighboring APs 102b. In a multiple access scheme based on carrier sense multiple access/collision avoidance (CSMA/CA), it is possible for a listening AP 102a to receive packets sent by neighboring APs 102b to another node, provided that the listening AP 102a is receiving on the same channel as the one used by the neighboring APs 102b.

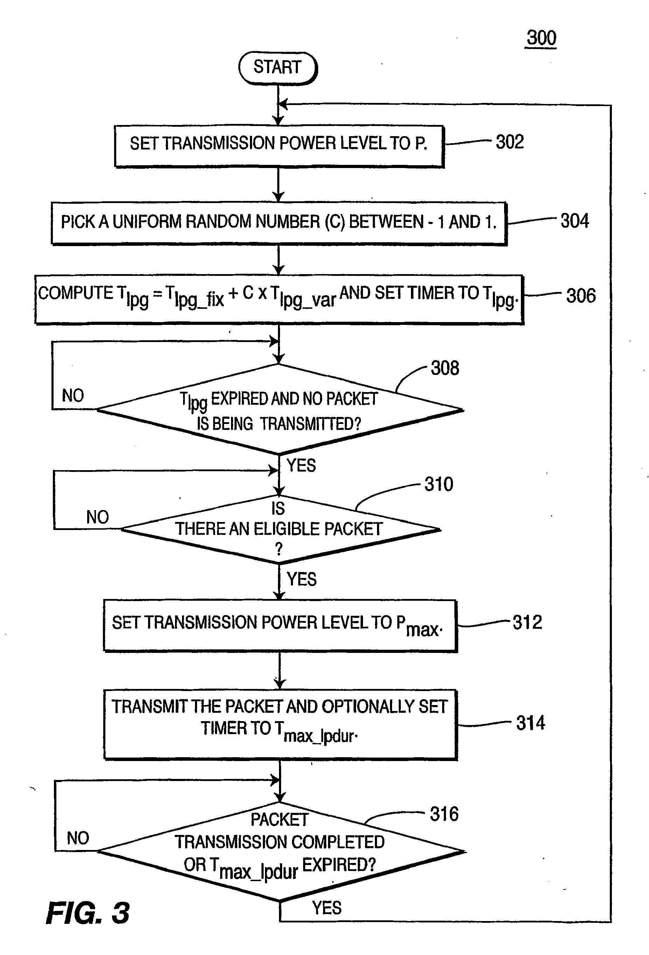

Figure 3 is a flow diagram of a process 300 for generating a loud packet in accordance with the present invention. Table 1 summarizes the parameters involved in the process 300 of generating loud packets. As those of skill in the art would realize, other parameters may be used in addition to, or in place of, these parameters.

Table 1

| Symbol | Description |
|---|---|
| $T_{1pg\_fix}$ | Fixed component of the loud packet generation interval |
| $T_{1pg\_var}$ | Amplitude of the variable component of the loud packet generation interval |
| $T_{max\_1pdur}$ | Maximum duration of a loud packet |
| $P_{max}$ | Maximum transmission power |
| P | Transmission power used by packets other than loud packets. |

Loud packets are packets which are transmitted at maximum power. Loud packets are generated by intermittently raising the transmission power to the maximum power $P_{max}$ prior to the transmission of the packets. Any packet that would normally be transmitted by an AP to one of its associated WTRUs may become a loud packet, provided that it is possible to identify the transmitting AP, such as by determining the source address, from the information contained in the packet. Such a packet is referred to hereinafter as an "eligible packet". As explained hereinbefore, the information in a loud packet does not need to be destined to the listening AP 102a receiving and utilizing them for the purpose of path loss estimation.

The AP sets a transmission power level to P (step 302). Generally, the AP transmits packets other than loud packets at a certain power P, which may be lower than the maximum power $P_{max}$. This power level might be dependent on the type of packet being transmitted, (such as control, management or data frame), or on the destination of a WTRU. The AP then picks a random number (C) between -1 and 1 to compute a transmission time interval of loud packets (step 304). A minimum interval of time ($T_{1pg}$) between successive periods of loud packet generation is computed according to Equation 1 (step 306):

$$T_{lpg} = T_{lpg\_fix} + C \times T_{lpg\_var}; \qquad\qquad Equation\ (1)$$

The AP waits until $T_{1pg}$ expires and verifies that no packet is being transmitted (step 308). If a packet is being transmitted, the process 300 returns to step 308 and the AP keeps waiting until the end of transmission of the packet. If $T_{1pg}$ expires and no packet is being transmitted, the AP determines whether there is an eligible packet to be transmitted (step 310). If there is no eligible packet, the process 300 returns to step 310 to wait until there is an eligible packet. If there is an eligible packet, the AP sets its transmission power to the maximum level (step 312) and transmits the packet (step 314).

The AP may optionally set a timer for the maximum duration of a loud packet $T_{max\_1pdur}$ (step 314). The AP determines whether either a transmission of the packet is completed or $T_{max\_1pdur}$ expires (step 316). If either of them occurs, the process 300 returns to step 302. If $T_{max\_1pdur}$ expires before transmission of the loud packet is completed, the AP may restore its transmission power to a value lower than the maximum in order to limit interference.

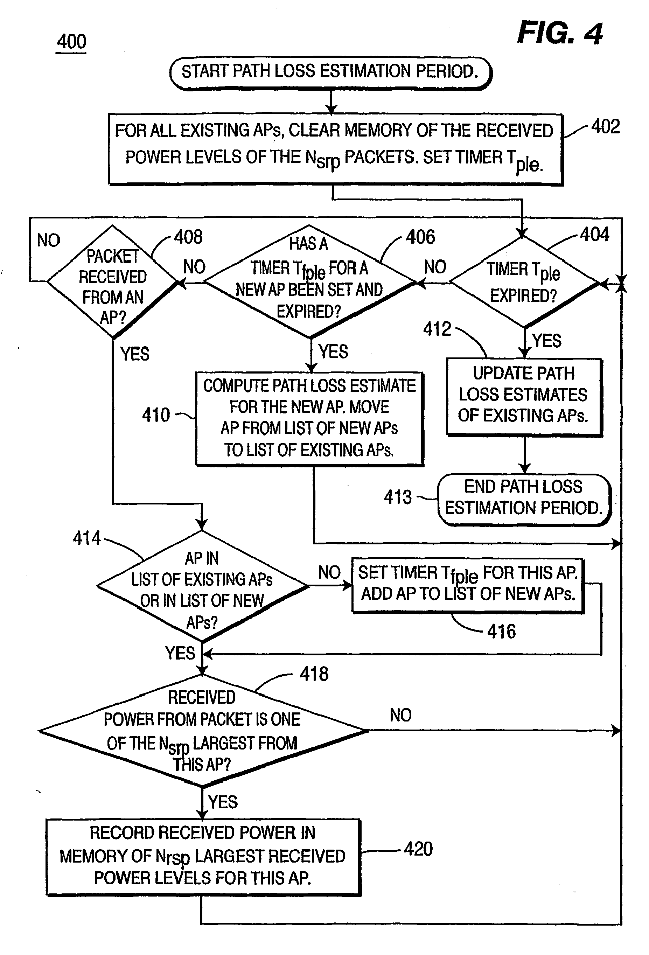

Figure 4 is a flow diagram of a process 400 for estimating path losses to neighboring APs in accordance with the present invention. This process 400 is repeated every path loss estimation period ($T_{ple}$). The listening AP maintains at all times, two lists of neighboring APs: 1) a list of existing neighboring APs; and 2) a list of new neighboring APs. For each neighboring AP in either list, the listening AP maintains in memory the power level values of $N_{srp}$ packets transmitted from neighboring APs. Alternatively, the listening AP may also maintain in memory more information about the received power of packets transmitted from neighboring APs, such as a histogram of the number of received packets for different intervals of received power.

Table 2 summarizes the parameters that are involved in path loss estimation. As those of skill in the art would realize, other parameters may be used, in addition to, or in place of these parameters.

Table 2

| Symbol | Description |
|---|---|
| $T_{ple}$ | Duration of a path loss estimation period |
| $T_{fple}$ | Duration of the path loss estimation period of a new AP |
| $N_{srp}$ | Number of power level values of the strongest packets to keep in memory |
| $N_{dap}$ | Number of path loss detection period(s) after which an AP is removed from the list if no packet is received from it. |
| $N_{aplp}$ | Averaging window of path loss estimates |
| PL(i) | Path loss to the AP #i |

The path loss estimation process 400 starts by clearing the memory of the power levels values of the $N_{srp}$ packets, (or any information regarding the received power of packets), for all APs in the list of existing neighboring APs (step 402). The AP also sets a timer of duration $T_{ple}$ for the expiration of the path loss estimation period (step 402).

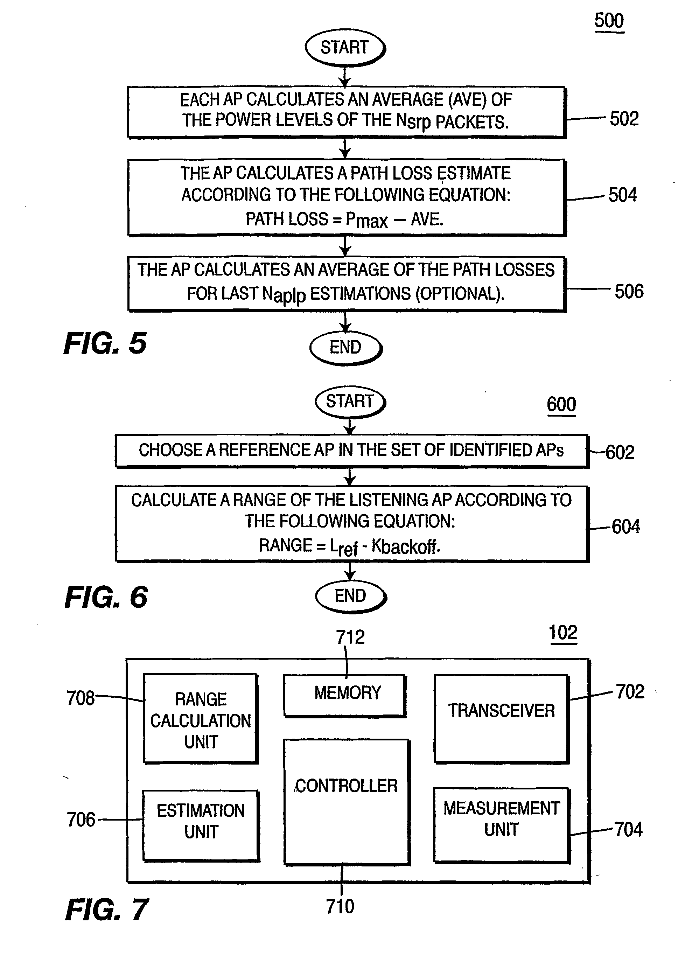

The AP determines whether the timer $T_{ple}$ has expired (step 404). If it is determined that the timer ($T_{ple}$) for the path loss estimation period has expired, the listening AP computes path loss estimates to all neighboring APs in the list of existing APs according to the process 500 which will be explained with reference to Figure 5 hereinafter (step 412). The path loss estimation process 400 is then completed (step 413).

If the timer $T_{ple}$ has not expired, the AP further determines whether a timer for new AP, $T_{fple}$, (which is set when a new AP is discovered at steps 414 and 416, which will be explained hereinafter), has expired (step 406). If there is no new AP in the list of new neighboring APs, (and therefore $T_{fple}$ has not been set and expired), the AP determines whether a packet is received from an AP (step 408). If it is determined at step 408 that there is no packet received from an AP, the process 400 returns to step 404.

If there is a packet received from an AP, the listening AP determines whether the transmitting AP is present in one of the two lists of neighboring APs that the listening AP maintains (step 414). If the transmitting AP is not present on the lists of neighboring APs, the transmitting AP is added to the list of new neighboring APs (step 416). Additionally, a timer for a new AP, $T_{fple}$, is set for this new AP. The duration of $T_{fple}$ is normally set to be smaller than the duration of $T_{ple}$ of the path loss estimation period. This allows the listening AP to update its Range more quickly in case a new AP is powered on in its vicinity, although this is not required. At the expiration of $T_{fple}$, a path loss estimate to this new AP will be calculated in step 410. After step 416, the process 400 then proceeds to step 418.

If the transmitting AP is present on the list, (or after the new AP is added to the list of neighboring APs), the process 400 proceeds to step 418 to determine if the received power value of the packet is one of the $N_{srp}$ largest received power values of packets sent by the transmitting AP since the beginning of the path loss estimation period. If this is the case, the memory of AP is updated to include this new information, (i.e. regarding the newest $N_{srp}$ packet) (step 420). The process 400 returns to step 404. If this is not the case the process 400 returns directly to step 404.

Referring back to step 406, if it is determined that the timer ($T_{fple}$) for a new AP has expired (step 406), the listening AP computes the path loss estimate to the new AP according to the process 500 which will be described with reference to Figure 5 hereinafter. The listening AP also moves the new AP from the list of new neighboring APs to the list of existing neighboring APs (step 410).

Additionally, (and optionally), if there is a neighboring AP in the list of existing APs from which no packet was received since $N_{dap}$ activations of the path loss estimation process 400, this AP is removed from the list of existing APs. This is performed at step 412 just prior to the path loss estimates of existing APs being updated. This allows the listening AP to automatically reconfigure its coverage area in case an AP is shut down or removed from the environment.

Figure 5 is a flow diagram of a process 500 for calculating a path loss estimate to an AP which is implemented in steps 410 and 412 in the process 400. The average (AVE) of the power levels of the $N_{srp}$ packets sent by the concerned AP, collected in the process 400, is calculated (step 502). The calculation of AVE is performed on these values in order to reduce the variations due to temporal fading. If less than $N_{srp}$ packets have been collected, AVE is taken only over the number of collected values. Preferably, AVE should be calculated on values of received power expressed in linear units (e.g. mW, or W). Then AVE may be converted in dBm units. Alternatively, AVE could take place on the values of received power expressed in dB units (e.g., dBm or dBW).

After calculating AVE, a path loss estimate in dB for the latest estimation period is calculated using the following Equation 2 (step 504).

$$\text{Path loss} = P_{\text{max}} - AVE; \qquad\qquad \text{Equation (2)}$$

where $P_{\text{max}}$ is the maximum transmission power of the loud packets, and AVE is the average on received powers, both expressed in dBm.

The value for $P_{\text{max}}$ may be obtained in many possible ways. For example, the value could be signaled between APs implementing the invention, along with the loud packets themselves or in separate messages. Preferably, the APs implementing the invention can be configured to use a certain value of $P_{\text{max}}$, consistent with a typical maximum power level of commercially available APs (e.g. 20 dBm). A listening AP implementing the present invention assumes that neighboring APs use this value of $P_{\text{max}}$. This would allow an AP implementing the invention to calculate with a reasonable accuracy a path loss estimate to a neighboring AP not implementing the invention (i.e., a legacy AP) but transmitting most or all of its packets at power level close to $P_{\text{max}}$.

The path loss estimate calculation in Equation (2) uses the fact that there is a strong probability that the power level values of the $N_{srp}$ packets from a neighboring AP were collected from packets transmitted at, or close to, the maximum power $P_{\text{max}}$ from this AP. The process of transmission of loud packets by the neighboring AP ensures that at least a fraction of the packets transmitted by this AP are transmitted at the maximum power $P_{\text{max}}$. It should be understood by those of skill in the art that the path loss can be calculated in other ways. For example, a path loss estimate in linear units can be calculated by dividing the transmission power of the loud packet expressed in linear units by the average received power expressed in linear units.

The path loss estimate to a neighboring AP calculated for a path loss estimation period may be averaged with path loss estimates to the same AP calculated in the past ($N_{aplp}$ - -1) path loss estimation periods (step 506) in order to improve the accuracy and stability of the path loss estimation.

Figure 5 and the associated description set forth a general process 500 for an AP to estimate its path loss to other APs, as well as helping other APs to estimate their path losses to this AP by sending loud packets. These methods can be made more efficiently by implementing a number of optional techniques that will be described hereinafter.

In a first optional technique, in order to accelerate the discovery of a newly activated AP by neighboring APs just after its activation, the newly activated AP may transmit loud packets continuously or at a higher frequency than normal for a limited period of time.

In a second optional technique, a listening AP receiving a large number of loud packets from an AP during a path loss estimation period may underestimate the average path loss to the new AP due to the temporal fading fluctuations between the APs and the method of estimation based on selecting the largest received power values. This can be mitigated by restricting the use of packets received from other APs to certain time windows only. For example, the listening AP may consider packets from other APs for path loss estimation only during windows of 5 ms occurring intermittently approximately every 1,500 ms. This would have the effect of reducing the number of received loud packets used in the path loss estimation and consequently the bias toward high values of the received power.

In a third optional technique, a listening AP may estimate its path losses to other APs utilizing channels different from the operating channel of the listening AP by tuning its receiver to the different channels for short periods of time occurring intermittently. These periods could last for example 5 ms and occur every 1,500 ms for a given channel. This technique also allows the listening AP to gather information about channels used by neighboring APs which can be useful for the purpose of optimizing channel selection.

Figure 6 is a process 600 for calculating the Range of an AP from the estimates of path losses to other APs. It should be understood by those of skill in the art that various methods of calculating a Range other than the one disclosed in the present invention can be implemented in accordance with the present invention.

Table 3 summarizes the parameters involved in the calculation of Range of the AP. As those of skill in the art would realize, other parameters may be used in addition to, or in place of, these parameters.

Table 3

| Symbol | Description |
|---|---|
| PL(i) | Set of path losses to the AP #i (from the measurement sub-process) |
| $N_{cpcn}$ | Parameter to choose the reference AP |
| $K_{backoff}$ | Backoff from the reference AP |

Referring to Figure 6, a reference AP is selected among a set of identified APs (step 602). The identified APs are generally neighboring APs, although this is not a requirement. A listening AP defines its coverage area based on its path loss to the reference AP. The reference AP may be selected as the AP to which the path loss is the $N_{cpen}$th smallest. In the case where the number of identified APs detected by the listening AP is smaller than the constant $N_{cpcn}$, it is deemed that there is no reference AP. In this situation, the desired Range (coverage area) of the listening AP is defined to be "unlimited". This means that the listening AP should, for example, transmit at its maximum power.

After the reference AP has been selected, the Range is established by defining a certain amount of overlap between the coverage areas of the reference AP and of the listening AP (step 604). The Range of the AP in dB is calculated according to the following Equation:

$$RANGE = L_{ref} - K_{backoff}, \qquad\qquad Equation\ (3)$$

where $L_{ref}$ is the path loss to the reference AP, and $K_{backoff}$ is a constant representing the difference between the path loss to the reference AP and the path loss of a WTRU situated at the edge of the coverage area of the listening AP.

Selecting a lower value for $N_{cpcn}$ for a given value of $K_{backoff}$ tends to reduce the coverage area of the listening AP, (and the overlap between the coverage areas of this AP to neighboring APs), since the path loss to the reference AP is smaller. Conversely, a higher value for $N_{cpen}$ tends to increase the coverage area of the listening AP. For a given value of $N_{cpen}$, selecting a smaller value for $K_{backoff}$ tends to increase the coverage area of the listening AP, as well as the overlap between the coverage areas of the listening AP and that of the reference AP. Selecting a larger value has the opposite effect.

In general, a large overlap between coverage areas of APs is beneficial for avoiding coverage gaps, but may be detrimental when it is desired to reduce the interactions between APs. It should also be noted that the choice of values for these parameters should be dependent on whether or not neighboring APs operating on different channels were detected, (by intermittently listening on these other channels as previously explained in the paragraphs on optional techniques). If neighboring APs operating on different channels were not detected, then $N_{cpcn}$ could be set to a smaller value since there is a possibility that other neighboring APs operating on different channels are present and closer than the closest detected co-channel AP.

Figure 7 is a block diagram of an AP configured to autonomously determine the coverage in accordance with the present invention. The AP 102 comprises a transceiver 702, a measurement unit 704, an estimation unit 706, a range calculation unit 708, a controller 710, a memory 712 and a communication bus (not shown) to interconnect the units 702-710. The transceiver 702 generates loud packets, transmits loud packets to, and receives loud packets from, other APs. Loud packets are transmitted at the maximum power level of the AP 102. As aforementioned, the maximum level may be a predetermined value, or a special field may be inserted into the loud packet to indicate the transmission power level of the loud packets. The measurement unit 704 measures received powers of the loud packets received from the other APs. The estimation unit 706 estimates path losses from other APs using the measured received powers and a known transmission power level of the loud packets. The range calculation unit 708 calculates the range of the AP from the estimated path losses from other APs.

The memory 712 stores a list of other APs. Although, the list actually comprises two sub-lists, (a sub-list of existing APs and a sub-list of new APs), functionally, a single list with a sub-designation is all that is required. When the AP receives a loud packet from a particular AP, the controller 710 determines whether the particular AP is included in the list, and adds the AP to the list in memory 712 if the AP is not included in the list. The controller 710 also controls the duration for measuring the received power of the packets before a path loss estimate is calculated. The controller 710 sets the duration for new APs differently from, and preferably shorter than, existing APs.

If neighboring APs utilizing other frequency channels are deployed at locations sufficiently close to that of an overloaded AP, the performance of all WTRUs may be dramatically improved if some of the WTRUs associate to these neighboring APs in place of the overloaded AP. By controlling the transmission power level of an AP, and especially the transmission power level of the beacon and probe response packets, it is possible to control the extent of area around the AP from which WTRUs can associate to this AP. When a severe load imbalance exists among a plurality of APs, the loads of the APs can be balanced by appropriately adjusting the transmission power levels of the APs, such that an overloaded AP reduces its transmission power level and a lightly loaded AP increases its transmission power level.

The present invention provides a wireless communication method and apparatus which adequately serves associated WTRUs within a predetermined region or coverage area around an AP, taking into account possible interference experienced by the WTRUs. Although the present invention can work with inter-AP signaling, as described hereafter and under the current assumptions, no inter-AP signaling exists.

According to the present invention, the extent of a baseline coverage area is defined for each AP, and is applied to situations where no severe load imbalance exists between APs. This baseline range is defined in terms of a maximum path loss ("baseline range") between a WTRU and the AP, such that the WTRU experiences satisfactory performance. The baseline range can be specified directly by a person deploying the WLAN, or determined automatically by the APs based on path loss measurements or other measurements.

The mitigation of load imbalances between basic service sets (BSSs) addresses a practical scenario where a large number of WTRUs fined themselves concentrated in a specific area, such as in a conference room or a "hot spot." In this scenario, transmission power adjustments for beacon, probe response and other types of packets can favor load balancing by making some APs appear more or less attractive for association from the point of view of WTRUs.

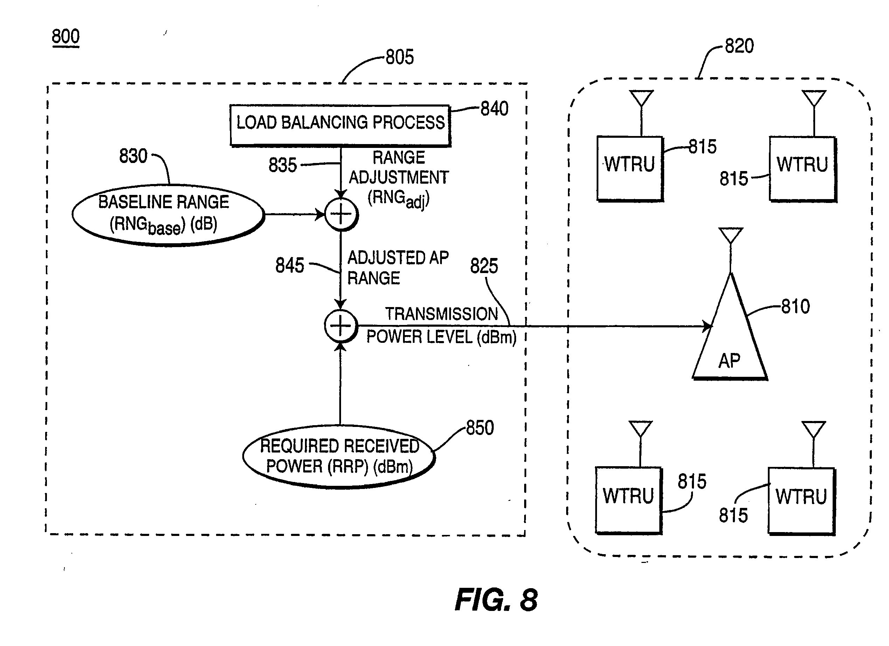

Figure 8 shows a wireless communication system 800 which implements a power control process 805 in accordance with the present invention. The power control process may run on a processor (not shown) located in the system 800 that controls an AP 810. The wireless communication system includes at least one AP 810 which communicates with a plurality of WTRUs 815 located within an AP coverage area 820. The power control process 805 determines the transmission power level 825 of the AP 810.

In the power control process 805 of Figure 8, a baseline range (RNG$_{base}$) parameter 830 is obtained either directly by a manual configuration or using an automated process. The RNG$_{base}$ parameter 830 delimits the extent of the desired coverage area 820 of the AP 810 when no severe load imbalance exists between the AP 810 and other APs (not shown). The transmission power level 825 of the AP 810 is set so that WTRUs 815 located within the coverage area 820 have an acceptable path loss. The RNG$_{base}$ parameter 830 is summed with a range adjustment parameter (RNG$_{adj}$) 835 determined by a load balancing process 840 according to the load of the AP 810, resulting in an adjusted AP range 845.

In the power control process 805 of Figure 8, a required received power (RRP) parameter 850 is also obtained either directly using a manual configuration or by an automated process. The value of the RRP parameter 850 is set to the minimum power level at which a packet transmitted by the AP 810 may be successfully received by a WTRU 815. The value of the RRP parameter 150 may vary depending on the type of packet (beacon, probe response or the like) and the resulting data rate.

The transmission power level 825 of the AP 810 (in dBm) is determined by summing the value of the adjusted AP range 845 (in dB) with the value of the RRP parameter 850 (in dBm) for the packet to be transmitted, subject to a maximum power limitation.

Table 4 summarizes the variables involved in the setting of the transmission power level 825 of the AP 810. These variables are exemplary, and it should be noted that other variables may be used.

Table 4

| Symbol | Description |
|---|---|
| RNG$_{base}$ | Baseline Range |
| RNG$_{adj}$ | Range Adjustment (set using process 900 of Figure 9) |
| RRP | Required Received Power |
| P$_{max}$ | Maximum AP transmission power |
| P | AP transmission power, where $P = min (P_{max}, RNG_{base} + RNG_{adj} + RRP)$ |

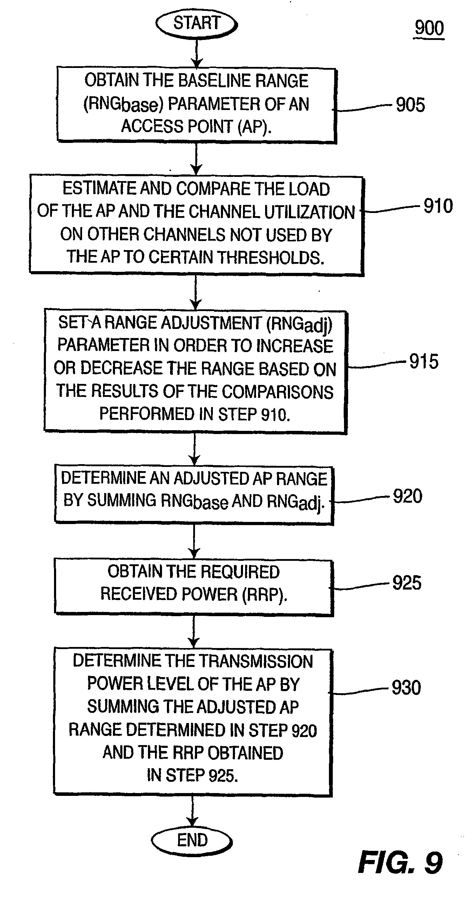

Figure 9 is a flowchart of a process 900 which implements method steps in accordance with the present invention. An example of the parameters involved in process 900 is presented in the following Table 5. The parameters in Table 5 are suitable for use in an IEEE 802.11b system. The value of the RRP parameter depends on the type and data rate of the transmitted packet, (and therefore different minimum transmission power levels may be applicable to different types of packets).

Table 5

| Symbol | Description | Type | Default value |
|---|---|---|---|
| T$_{LB}$ | Periodicity of Load Balancing | Input, configuration | 30 s |
| PL$_{min}$ | Minimum Path Loss of the load histogram | Input, configuration | 50 dB |
| PL$_{max}$ | Maximum Path Loss of the load histogram | Input, configuration | 115 dB |

(continued)

| Symbol | Description | Type | Default value |
|---|---|---|---|
| $\Delta_{LPL}$ | Width of Path Loss bin in load histogram and Range Adjustment large step size | Input, configuration | 2 dB |
| $\Delta_{SPL}$ | Range Adjustment small step size | Input, configuration | 0.1 dB |
| $N_{ownload}$ | Number of own load histograms averaged in the immediate past | Input, configuration | 4 |
| $N_{chanload}$ | Number of own load histograms averaged in the immediate past | Input, configuration | 4 |
| $P_{STA}$ | Assumed WTRU transmission power | Input, configuration | 17 dBm |
| $C(f)$ | Channel Utilization of channel f | Input, measurement | N/A |
| $L_{low}$ | Low threshold for load balancing in percentage of medium time | Input, configuration | 20% |
| $L_{high}$ | High threshold for load balancing in percentage of medium time | Input, configuration | 40% |
| $RNG_{adjmin}$ | Minimum Range Adjustment | Input, configuration | -30 dB |
| $RNG_{adjmax}$ | Maximum Range Adjustment | Input, configuration | 30 dB |
| $RNG_{adj}$ | Range Adjustment | Output, internal variable | N/A |
| RRP | Required Received Power | Input, determined from manual configuration or automated process | -90 dBm (for beacon and probe response packets) -84 dBm (for data packets) |

The load balancing process 840 uses a histogram of the load in a particular BSS from associated WTRUs as a function of path loss (PL). This is measured during normal operation over a period $T_{ownload}$ by summing the durations of transmitted packets and correctly received packets to/from associated WTRUs whose path loss belongs to the same bin. Path loss is estimated based on the received signal strength indicator (RSSI) of packets received from WTRUs and the assumed WTRU transmission power. The histogram is divided by $T_{ownload}$ to provide results in terms of percentage of medium time. The width of a bin is $\Delta_{LPL}$. Histograms from the past $N_{ownload}$ periods of $T_{ownload}$ are averaged to increase the quality of the statistics.

The method of obtaining the duration of a correctly received packet depends on the chipset capabilities. The chipset may provide directly the duration of a received packet. If this is not available, the chipset may provide the data rate of the received packet. In that case, the duration of the packet may be derived by dividing the number of bits in the medium access control (MAC) packet data unit (PDU) by the data rate and add to this the duration of the physical layer (PHY) header. If this is not available either, the duration of the packet may be derived by measuring the time elapsed between the PHY-RESTART and PHY-RXEND indications corresponding to the reception of the packet.

From the latter histogram, one defines an in-range load, $L_{in}(PL)$, as the total load in the BSS for path loss values inferior or equal to the variable PL.

Referring to Figures 8 and 9, the baseline range ($RNG_{base}$) parameter 830 of the AP 810 is determined either directly by a manual configuration or using an automated process based on various measurements (step 905). The $RNG_{base}$ parameter 830 may be determined by measuring path loss from the AP 810 to a WTRU 815. The $RNG_{base}$ parameter 830 is preferably set irrespective of the channels used by the neighboring APs. The reasoning behind this approach is that the desired coverage area of an AP is primarily dependent on the locations that the installer has chosen for the set of APs supporting an extended service set (ESS).

Still referring to Figure 9, in step 910, the load of the AP as well as the channel utilization on other channels is compared to certain thresholds. In step 915, the range adjustment ($RNG_{adj}$) parameter 835 is adjusted in order to increase or decrease the range based on the result of the comparisons made in step 910. The $RNG_{adj}$ parameter 835 is applied in order to reduce the load imbalance between the AP and its neighboring APs.

Typically, if a lightly loaded AP is adjacent to a heavily loaded AP utilizing a different channel, the lightly loaded AP increases its $RNG_{adj}$, while the heavily loaded AP decreases its $RNG_{adj}$. This tends to balance the load between the APs. The $RNG_{adj}$ is not the "step size" of the range adjustment. It represents the difference between the current range, (after all previous adjustments), and the baseline range. For example, if the current range is 96 dB and the baseline range is 90 dB, the range adjustment is 6 dB. If, at the next load balance activation, the range adjustment is increased by $\Delta_{LPL}$ = 2 dB, the range adjustment is now 8 dB and the current range 98 dB.

In step 920, the value of the adjusted AP range 845 is determined by summing $RNG_{base}$ and $RNG_{adj}$. In step 925, the RRP for each type of packet is determined either directly by a manual configuration or using an automated process. In step 930, the transmission power level 825 of the AP 810 is determined by summing the value of the adjusted AP range 845 with the RRP 850.

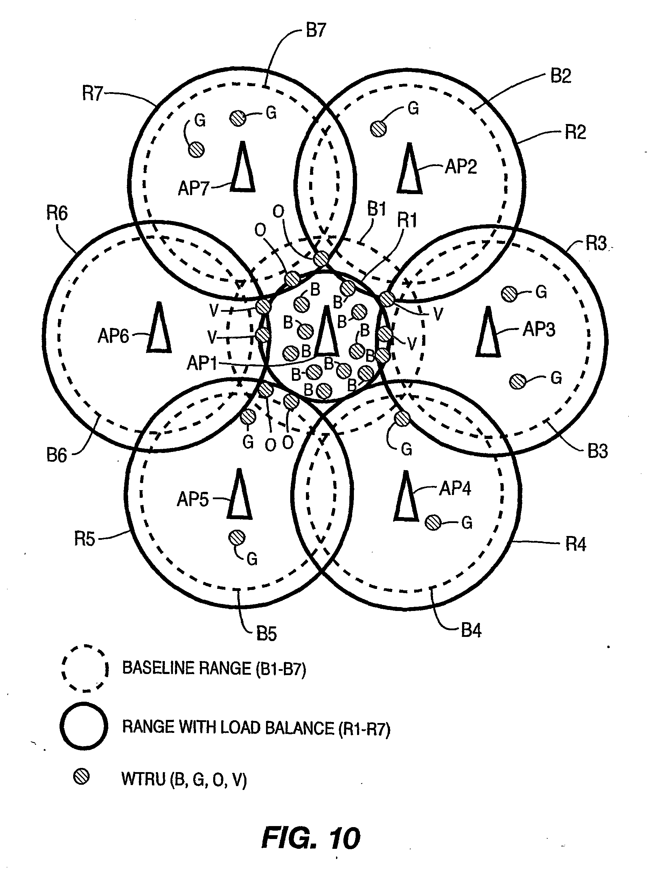

Figure 10 illustrates a scenario where the load balancing process 840 is used to mitigate congestion occurring in a particular BSS. An AP, AP1, having a baseline range B 1 is surrounded by neighboring APs, AP2-AP7, having respective baseline ranges R2-R7. It is assumed here that the center AP (AP1) uses a channel different than the ones used by the surrounding APs (AP2-AP7).

WTRUs are represented by points "O", "G", "V" and "B". WTRUs "G" are associated with the boundary APs. WTRUs "V" and "B" are associated with the center AP, AP1. WTRUs "O" are associated to the boundary APs, AP5 and AP7, because their WTRU-dependent association processes prefer far-away but lightly-loaded APs, AP5 and AP7, over the heavily-loaded closest AP, AP1.

As shown in Figure 10, the load of the AP, AP1, is heavy compared with those of the other neighboring APs, AP2-AP7, since the density of the WTRUs around the AP, AP1, is considerably higher than the WTRUs around the neighboring APs, AP2-AP7. WTRUs, "O", "V" and "B", lie outside the area delimited by the $RNG_{base}$ of boundary APs (AP2-AP7), causing signals received from the APs to fall below the RRP. Therefore, an unacceptable quality in the downlink is experienced due to the severe load imbalances between the AP, AP1, and the neighboring APs, AP2-AP7.

An AP estimates the load in neighboring BSSs using different channels by estimating the channel utilization C $(f_i)$ in all frequency channels $f_i$ used in the WLAN, (except the one currently used by the AP). These channel utilization estimates can be obtained by intermittently listening to these frequency channels for short periods of time, (i.e., Silent Measurement Periods (SMP)), so that normal communications associated with the AP are not substantially disrupted. The channel utilization represents the fraction of the time the wireless medium is busy, (i.e., used by an IEEE 802.11 device), on this channel. It can be estimated as the total duration of the clear channel assessment (CCA) Busy state during all SMPs on this channel over a $T_{chanload}$ period, divided by the total duration of all SMPs on this channel over a $T_{chanload}$ period. The receiver is in the CCA busy state when it can detect that an IEEE 802.11 type of signal is present at a power higher than a certain threshold.

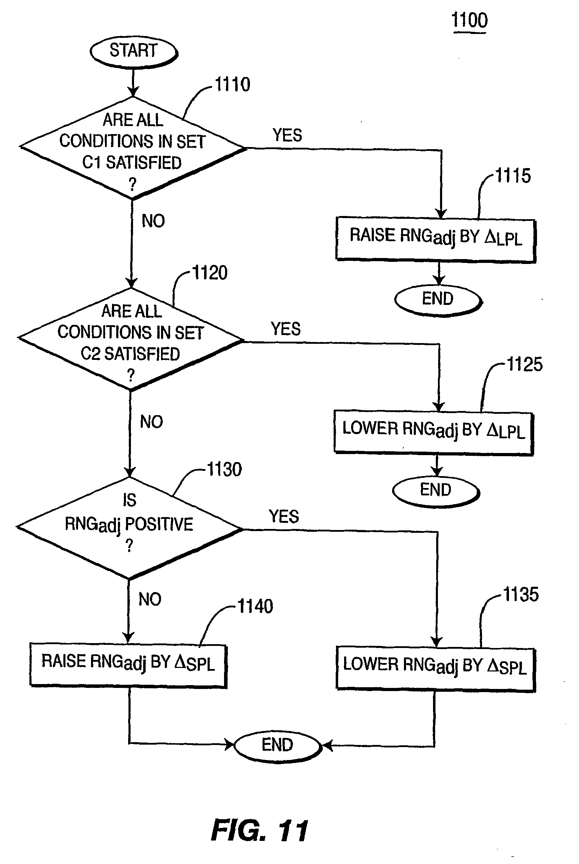

Figure 11 is a flowchart of a range adjustment process 1100. In step 1110, it is determined whether all of the conditions in a first set C1 are satisfied. The conditions in the set C1 include:

1) $RNG + \Delta_{LPL} \leq RNG_{base} + RNG_{adjmax}$;

2) $L_{in}(PL=RNG) < L_{low}$, (i.e., the load due to WTRUs whose path losses to the AP are less than RNG should be less than $L_{low}$);

3) $L_{in}(PL=RNG + \Delta_{LPL}) < L_{high}$, (i.e., the load due to WTRUs whose path losses to the AP are less than $RNG+A_{LPL}$ should be less than $L_{high}$); and

4) $C(f) > L_{high}$ for at least one channel f (other than the one currently used by this AP) for at least one neighboring AP.

In the above set C1, $RNG_{adjmax}$ is a configurable parameter setting the maximum range adjustment. The condition 1) checks that the range adjustment is not exceeded. $L_{low}$ and $L_{high}$ are also configurable parameters defining thresholds for increasing or decreasing the range, respectively. The condition 2) checks that the in-range load for the current range is below the $L_{low}$ threshold. The condition 3) checks that the in-range load, $L_{in}$, will not exceed the threshold $L_{high}$ that would result in a range adjustment reduction at the next activation. This is to prevent ping-pong re-adjustments in case the load is dominated by a single WTRU. Finally, the condition 4) checks that the load in at least one of the channels used by neighboring APs exceeds the $L_{high}$ threshold.

If all of the conditions in the set C1 are satisfied, the $RNG_{adj}$ is raised by a large step size $\Delta_{LPL}$ (step 1115). The large step size $\Delta_{LPL}$ is used to modify the range adjustment when a load balancing action needs to take place (increase or reduce the range). A small step size $\Delta_{SPL}$ is also used to restore gradually the ranges of the APs to the baseline range in the long term, as will be discussed in further detail below. If all of the conditions in the set C1 are not satisfied, it is determined whether all of conditions in a second set C2 are satisfied (step 1120). The conditions in the set C2 include:

1) $RNG - \Delta_{LPL} \geq RNG_{base} + RNG_{adjmin}$;

2) $L_{in}(PL=RNG) > L_{hig}$;

3) $L_{in}(PL=RNG - \Delta_{LPL}) > L_{low}$; and

4) C(f) < $L_{high}$ for all channels f other than the one currently used by this AP.

In the above set C2, $RNG_{adjmax}$ is a configurable parameter setting the minimum range adjustment (this is normally a negative value). The condition 1) checks that the range adjustment is not too low. The condition 2) checks that the in-range load, $L_{in}$, for the current range is above the $L_{high}$ threshold. The condition 3) checks that the in-range load, Lm will not be below the threshold $L_{low}$ that would result in a range adjustment increase at the next activation. The condition 4) is provided to reduce the probability that the AP is off-loading some WTRUs that have no hope of being re-associated successfully because the alternate AP that they could reasonably re-associate with is also overloaded.

If all of the conditions in the set C2 are satisfied, the $RNG_{adj}$ is lowered by $\Delta_{LPL}$ (step 1125). If all of the conditions in the set C2 are not satisfied, (i.e., if the sets of conditions C1 and C2 are not satisfied), it is determined whether $RNG_{adj}$ is positive (step 1130). If $RNG_{adj}$ is positive, $RNG_{adj}$ is lowered by $\Delta_{SPL}$ (step 1135). If $RNG_{adj}$ is not positive (i.e., it is negative), $RNG_{adj}$ is raised by $\Delta_{SPL}$ (step 1140). This ensures that even if a change to the range adjustment is not warranted according to the set of conditions in C1 or C2, the range adjustment is still modified by a smaller step in the direction that reduces it in absolute terms, closer to zero. The reason for performing this small correction is to avoid a situation where the range adjustments drift toward values depending more on the specific history of load balancing actions, rather than toward values that optimize the system performance. This situation could arise because the set of conditions under which large range adjustment in sets C1 and C2 are performed are relatively restrictive, with, for example, a large gap between the $L_{low}$ and $L_{high}$ thresholds. This could cause the range adjustment of a particular AP to stay at an unnecessarily low or high value for a long time.

The range adjustment is preferably between -30 dB and +30 dB. The large step size ($\Delta_{LPL}$) is set to, for example, 2 dB, leading to a maximum rate of change for the Range of 4 dB in one minute. A faster rate of change could lead to overshooting given the time necessary for the system to react to range modifications through association/de-association mechanisms. The small step size, $\Delta_{SPL}$, is set to a value, e.g., 0.1 dB, which is substantially smaller than the accuracy of the transmission power setting. However, the goal here is not to increase the accuracy of the transmission power. It is to ensure that over a time frame of one day the system can return to its baseline settings if during that time the traffic conditions stay normal, rather than keep the memory of previous events of load imbalance.

As an optional additional process, the range adjustment resulting from the above process could be monitored over a long period of time, e.g. several days, in order to reset the baseline range in case it is found that the range adjustment is consistently biased towards a positive or negative value. Such bias would indicate that traffic conditions tend to be lighter or heavier for certain APs in average. For example, one AP may be serving a conference room where a meeting is held every day. With the current process, the range adjustment of this AP would start from 0 dB in the morning and then would gradually go down, e.g. over 30 minutes to say -6 dB after the meeting starts, while the surrounding APs would go up to +6 dB. After the end of the working day all APs would gradually return to a range adjustment of 0 dB. Long term monitoring of the range adjustment, after identifying that trend, could readjust the baseline ranges by +/-6 dB so that the range adjustment doesn't need to be performed when the meeting starts every morning. This would improve the performance during the first 30 minutes of the meeting.

The power control process 805 is activated on a periodic basis, e.g., every half-minute or so. After the range adjustment ($RNG_{adj}$) parameter 835 is set, the range of the APs, AP1-AP7, are determined by summing the $RNG_{base}$ 830 and $RNG_{adj}$ 835. Referring to Figure 10, as a result of the load balancing process 840, the range R2-R7 of the APs, AP2-AP7, is extended, and the range R1 of the center AP, AP1, is reduced. As a result, the WTRUs "O" now receive a signal above the RRP and experience a better downlink throughput. Some of the WTRUs "V" may re-associate to the boundary APs as a result of the stronger signals sent by them. Although the signals of the APs, AP2-AP7 are transmitted at a higher power level, this does not have severe consequences since they are lightly loaded and therefore do not generate a lot of interference. This is also compensated by the fact that the highly loaded center AP, AP1, now generates lower levels of interference.

The estimation periods for the load of the AP1 and the loads of the neighboring AP2-AP7, as well as the periodicity of the process, may be set to, for example, 30 seconds. This period is a compromise between the need for collecting a significant amount of load data on neighboring BSSs and the need of reacting reasonably quickly in case the load imbalance conditions deteriorate quickly, such as in a meeting-in-conference-room scenario.

The load balancing process can be performed together with other load balancing mechanisms implemented at the WTRU or the AP. It would be preferable that the WTRUs implement some sort of load balancing based on the noise or the traffic heard on each channel.

One potential problem with the proposed load balancing process is that overloaded APs that reduce their range may see their overload situation deteriorate if the WTRUs falling out-of-range do not re-associate to other APs, as the data rate to these out-of-range WTRUs may be reduced. Because of this, it may be necessary to implement a congestion control process that de-associates out-of-range WTRUs (or low-rate WTRUs) when the AP is overloaded, and denies association requests from out-of-range WTRUs.

One other aspect of the present invention is that, by controlling the transmission power of the beacon packet specifically, it is essentially ensures that WTRUs that are out-of-range are eventually forced to re-associate to other APs. Furthermore, there is less risk that WTRUs with no load balancing process incorrectly pick the overloaded AP (i.e., since it will not be able to hear the beacon or probe response packets).

This present invention computes a minimum transmission power level for an AP for providing a desired coverage area and to provide satisfactory performance of downlink transmissions from the AP to the WTRU.

The desired coverage area is defined in terms of a Maximum path loss (hereinafter referred to as the "range of the AP") between the AP and a WTRU associated to this AP, such that the WTRU enjoys satisfactory performance. The range may be automatically computed based on measurements of path loss to other neighboring APs, or be specified manually as a configuration parameter.

The satisfactory performance of downlink transmissions from the AP to the WTRU is provided by computing a minimum RRP based on statistics of packet errors in the downlink direction in the AP's own BSS, as well as the level of interference directly perceived by the AP. The minimum transmission power level (in dBm) is then obtained by humming the range of the AP (in dB) with the RRP (in dBm).

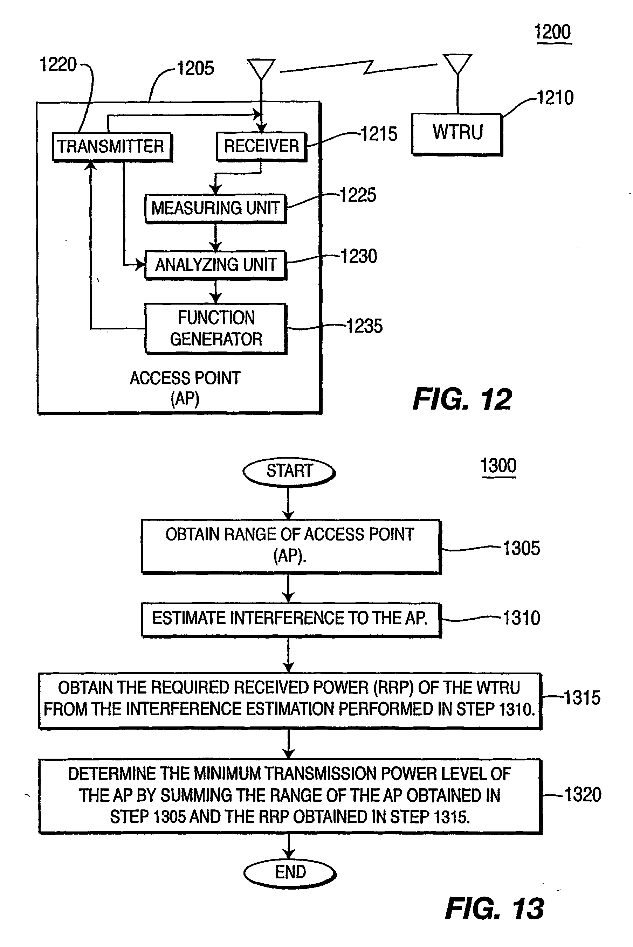

Figure 12 is a block diagram of a wireless communication system 1200 according to the present invention. The system 1200 includes an AP 1205 and at least one WTRU 1210. The AP 1205 includes a receiver 1215, a transmitter 1220, a measuring unit 1225, an analyzing unit 1230, and a function generator 1235. The measuring unit 1225 measures the interference at the AP 1205 based on data received via receiver 1215. The analyzing unit 1230 analyzes measurement data provided by the measuring unit 1225. Furthermore, the analyzing unit 1230 receives and uses information on data packets transmitted by the transmitter 1220 to the WTRU 1210. The function generator 1225 provides RRP and minimum transmission power parameters to the transmitter 1220 as determined by the analyzing unit 1230. The parameters are then transmitted from the AP 1205 to the WTRU 1210.

Figure 13 is a flowchart of a power control process 1300 including method steps which are executed in system 1200. In step 1305, the range of the AP 1205 is determined. In step 1310, an estimate of the interference to the AP 1205 is performed by the analyzing unit 1230. In step 1315, the RRP of the WTRU 1210 is obtained from the interference estimate of step 1310. As a result, the minimum transmission power level of the AP 1205 is obtained by summing the range of the AP 1205 and the RRP of the WTRU 1210 (step 1320).

Table 6 illustrates exemplary parameters involved in the determination of the AP transmission power. Other parameters and values may be used, in addition to, or in place of these parameters and values.

Table 6

| Symbol | Description | Value |
|--------|-------------|-------|
| RNG | Range of the AP | Manually configured or calculated using other processes |
| RRP | Required Received Power | Calculated by the AP |
| $P_{max}$ | Maximum AP transmission power | |
| $P_{min}$ | Minimum AP Transmission power | $P = \min(P_{max}, RNG + RRP)$ |

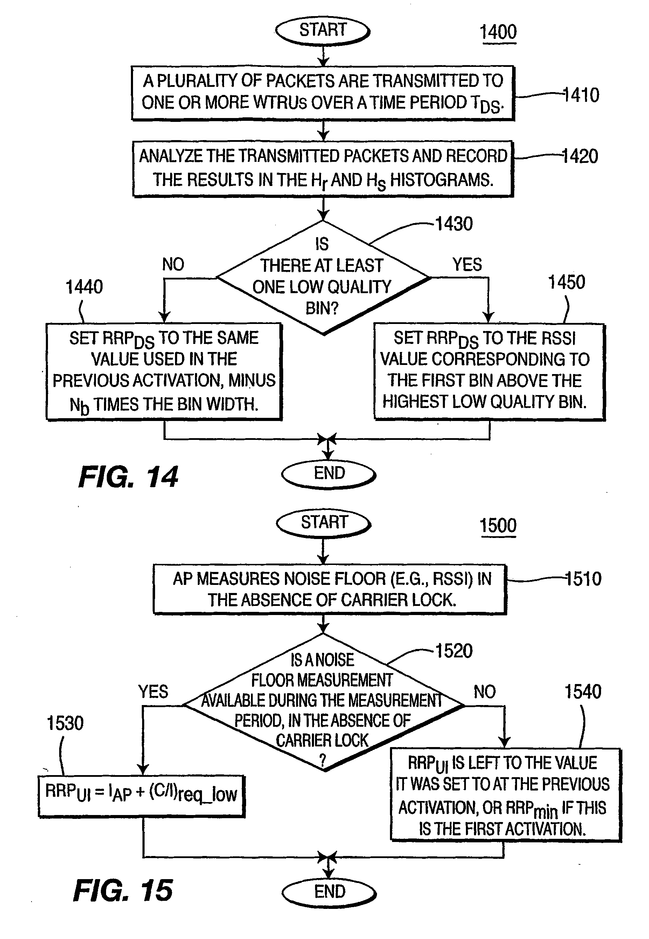

Control of the RRP based on the estimation of interference according to the present invention will now be described with reference to Figs. 14 and 15. Adjustment of the optimal RRP is implemented by executing a slow interference estimation process and a fast interference estimation process. Each of these processes use different measurements to evaluate the most appropriate value of the RRP at a given time.

The role of the slow interference estimation is to obtain the RRP with a reasonable degree of accuracy. The slow interference estimation produces a value designated RRP from downlink statistics ($RRP_{DS}$) obtained from the transmission of packets to the WTRUs 1210 during normal operation. The slow interference estimation is performed with a period, $T_{DS}$, which is relatively long, (e.g., approximately 1 minute).

The slow interference process is not executed every time a packet is transmitted by the WTRU 1210, in the sense that a new value of the RRP would be computed. Rather, statistics are collected over the multiple packets transmission that take place in between the activations (i.e., over $T_{DS}$). Upon execution of the slow interference estimation, the statistics are processed and the value of RRP is updated on a periodic basis (i.e., it is not triggered by a specific event). However, there could be a random component (jitter) between executions of the slow interference process.

The role of the fast interference estimation is to ensure that the AP 1205 can rapidly determine the transmission power to enable fast compensation of external interference, and allow at least some packets to be transmitted successfully after a sudden increase of interference. The fast interference estimation process produces a value designated RRP from Uplink Interference ($RRP_{UI}$). This value is obtained by measuring external interference at the AP 1205 obtained by measurement of a received signal strength indicator RSSI) associated with one or more WTRU transmitted packets in the absence of carrier lock. The fast interference estimation runs with a period ($T_{UI}$), which is relatively short, for example, on the order of a second. The RRP is obtained by summing $RRP_{DS}$ and $RRP_{UI}$ at any desired time.

Figure 14 is a flowchart showing the method steps of a slow interference estimation process 1400 in accordance with the present invention. The slow interference process 1400 is activated on a periodic basis. During a particular period $T_{DS}$, a plurality of packets are transmitted to one or more WTRUs 1210 and statistics of the packets are collected (step 1410). The analyzing unit 1230 in the AP 1205 analyzes the transmitted packets and records the result of the analysis in two separate histograms (step 1420). The two histograms have the RSSI perceived by the WTRU 1210 as the category axis. Bins of approximately 1 or 2 dB, preferably, may be used.

A first histogram $H_r$ records the average data rate of successfully transmitted packets and a second histogram $H_s$ is the percentage of successfully transmitted packets. The histogram $H_r$ is used only if rate control is enabled. Thus, the AP 1205 may use different data rates for different WTRUs 1210, according to the signal-to-noise ratio (SNR) perceived by the WTRU 1210. The AP 1205 would use a higher bit rate for WTRUs 1210 enjoying a high SNR and a lower bit rate for WTRUs 1210 with lower SNRs by performing a rate control process. Such a process may be based on downlink performance statistics for individual WTRUs 1210.

Every time a packet is transmitted to the WTRU 1210, a success or a failure event is recorded in the $H_s$ histogram according to whether or not the packet is received successfully. In the event that the packet is received successfully, it is recorded as a success event in the $H_s$ histogram. If the packet is not received successfully, it is recorded as a failure in the $H_s$ histogram. The data rate of the packet sent from the AP 1205 is also recorded in the $H_r$ histogram.

The RSSI of the latest successfully received packet from the WTRU 1210 is used to determine which bin of the histogram is utilized. The RSSI measured at the AP 1205 is translated to an RSSI perceived by the WTRU 1210. This translation is obtained by adding to the RSSI at the AP 1205 the difference between the transmission power of the AP 1205 and the assumed transmission power of the WTRU 1210, which can be described as follows:

$$RSSI(WTRU)perceived \quad = \quad TxPower(AP)-TxPower(WTRU)+RSSI(AP)$$

Equation (4)

Equation 4 is determined based on the following two equations:

$$RSSI(AP) = TxPower(WTRU) - PathLoss(WTRU - AP) \qquad \text{Equation (5)}$$

$$RSSI(WTRU) = TxPower(AP) - PathLoss(WTRU - AP) \qquad \text{Equation (6)}$$

where *TxPower (WTRU)* is the transmission power of the WTRU 1210, *TxPower (AP) is* the transmission power of the AP 1205, and *PathLoss (WTRU-AP)* is the path loss between the WTRU 1210 and the AP 1205. An age limit ($A_{maxRSSI}$) may be imposed on the latest RSSI measurement, to avoid biasing the statistics when a WTRU 1210 wanders away from the AP 1205.

Table 7 shows an exemplary result that could be observed as a result of the computation of the average data rate $H_r$ as well as the percentage of successful transmissions $H_s$ for each RSSI bin. The $H_r$ and $H_s$ histograms will not be perfectly monotonous in practice because of the different levels of interference experienced by the WTRUs 1210.

Table 7

| RSSI (dBm) | Number of packets | $H_r$ Average data rate (Mbps) | $H_s$ Percentage of successes (%) |
|---|---|---|---|
| -93 | 243 | 1.0 | 20 |
| -92 | 17 | 1.2 | 23 |
| -91 | 204 | 1.7 | 20 |
| -90 | 100 | 1.5 | 18 |
| -89 | 87 | 2.1 | 25 |

(continued)

| RSSI (dBm) | Number of packets | $H_r$ Average data rate (Mbps) | $H_s$ Percentage of successes (%) |
|---|---|---|---|
| -88 | 127 | 1.9 | 23 |
| -87 | 83 | 2.7 | 35 |
| -86 | 462 | 4.4 | 50 |
| -85 | 303 | 4.2 | 51 |
| -84 | 298 | 5.1 | 59 |
| -83 | 74 | 5.3 | 62 |
| -82 | 193 | 5.8 | 64 |
| -81 | 382 | 7.0 | 68 |
| -80 | 584 | 7.4 | 70 |

Table 7 is a good example of a histogram. A bin corresponds to a row in Table 7. The RSSI column in Table 7 shows the value corresponding to the center of the bin. For example, the row where RSSI = -89 dBm provides the bin collecting statistics of packets for which RSSI values range from -89.5 dBm to - 88.5 dBm.

A new histogram is built based on the packets transmitted over a period of duration $T_{DS}$. Instead of computing the $RRP_{DS}$ based on this last histogram only, it is preferable to combine the data from this last histogram to the data from past ($N_{hav}$-1) histograms in order to get better statistical significance and smoother behavior. First, the "number of packets" from all histograms are summed to get a total number of packets. Then, the data rates of packets from all histograms are summed, and the result is divided by the total number of packets from all histograms to get the average data rate ($H_r$). Finally, the number of packets successfully transmitted from all histograms are summed, and the result is divided by the total number of transmitted packets from all histograms to get the percentage of success ($H_s$).

Referring still to Figure 14, after the transmitted data is analyzed the results are recorded in the histograms in step 1420, it is determined whether there is at least one low quality bin (step 1430). It is preferable to determine the above criteria according to the following definitions of "a significant bin" and "a low quality bin". The significant bin is an RSSI bin for which a minimum amount of packets ($N_{DSmin}$) were received. The low quality bin is a significant bin satisfying one of the following conditions: average data rate of successful transmissions is below a threshold ($R_{min}$) and rate control is enabled; or the percentage of successful transmissions is below a threshold ($S_{min}$) (i.e., the percentage of non-successful transmissions is above a threshold $F_{min}$). The value of $RRP_{DS}$ is then calculated according to whether or not there is at least one low quality bin, as determined in step 1430. In the example set forth in Table 7, $RRP_{DS}$ would be set to -84 dBm if the $R_{min}$ and the $S_{min}$ were set to 5Mbps and 50% respectively.

If in step 1430 it is determined that there is no low quality bin, $RRP_{DS}$ is set to the same value that was used in a previous activation, minus $N_b$ times the bin width (step 1440). $N_b$ is a parameter and may be set to 1 by default. However, it is preferable that the $RRP_{DS}$ does not fall below the minimum value $RSSI_{min}$ used in the histograms. In case there was no previous activation, it is set to a minimum value, $RRP_{min}$. This value is configurable parameter.

If in step 1430 it is determined that there is at least one low quality bin, $RRP_{DS}$ is set to the RSSI value corresponding to the first bin above the highest low quality bin (step 1450).

The slow interference estimation process 1400 set forth in Figure 14 produces a relatively accurate result during low activity periods when little data is transmitted. For example, if there is a single associated WTRU 1210 located in the vicinity of the AP 1205 and experiencing good quality, $RRP_{DS}$ will not be raised to the power received by this WTRU 1210. However, one potential problem with this slow interference estimation process 1400 is the variability of the transmission power amongst WTRUs 1210; particularly those from different manufacturers. Since the AP 1205 cannot access the setting of transmission power of a particular WTRU 1210, a value must be assumed that would be used for all WTRUs 1210. If a WTRU 1210 transmits at a power lower than the assumed value, its RSSI will be underestimated. As a result, the quality of service for this RSSI could be overestimated, which will tend to reduce the RRP and the AP transmission power level.

In the opposite case, if a WTRU 1210 transmits at a power higher than the assumed value, its RSSI will be overestimated and the end result is that the AP 1205 transmission power will be increased. This problem would be eliminated if it were possible to read or control the maximum power of a WTRU 1210.

A prerequisite for the slow interference estimation process 1400 is that a reasonable number of downlink transmissions are successful. This condition may not be met when the interference conditions in the BSS deteriorate rapidly and/or dramatically due to the appearance of an external interference source.

Figure 15 is a flowchart showing the method steps of a fast interference estimation process 1500 in accordance with the present invention. In step 1510, the measuring unit 1225 in the AP 1205 measures a noise plus interference floor, (hereinafter called "noise floor" for simplicity). This noise floor consists of a combination of external interference and of weak signals that cannot be decoded. The noise floor can be measured as the RSSI when there is no carrier lock, that is, when the receiver has not detected the presence of an 802.11 type of signal. Alternatively, the noise floor may also be estimated during the reception of a packet depending on the capabilities of the receiver. Measurements are performed at intervals on the order of $T_{nf}$, which is relatively short, for example 100 ms or less. These measurements are averaged over a period of time ($T_{UI}$), on the order of a second.

Referring still to Figure 15, it is then determined whether a noise floor measurement is available during the measurement period (step 1520). In step 1530, if a noise floor measurement at the AP 1205 ($I_{AP}$) exists, $RRP_{UI}$ is determined as follows:

$$RRP_{UI} = I_{AP} + (C/I)_{req\_low} \qquad \text{Equation (7)}$$

where $I_{AP}$ is the noise floor estimate, and $(C/I)_{req\_low}$ is a configurable parameter representing the typical required carrier-to-interference ratio to have a reasonable probability of success at a low rate, (e.g., 1 or 2 Mbps). If no measurement of noise floor is available during the period, $RRP_{UI}$ is left to the value it was set to at the previous activation, or $RRP_{min}$ if this is the first activation (step 1540).

The RRP is obtained by combining the results of the slow interference estimation process 1400 and the fast interference estimation process 1500, as follows:

$$RRP = \max\{RRP_{DS}, RRP_{UI}\} \qquad \text{Equation (8)}$$

If Equation 8 is analyzed according to the relationship between $RRP_{DS}$ and $RRP_{UI}$, $RRP_{UI}$ should ideally be set at a level slightly lower than what would be necessary for the desired downlink quality, so that the RRP be primarily obtained by $RRP_{DS}$, except just after a sudden increase of external interference.

In this way, the fast interference estimation sub-process avoids that the downlink quality stays low during many minutes after the increase of interference.

After the RRP of the WTRU 1210 is obtained, the function generator 1235 in the AP 1205 sets the transmission power of the AP 1205 in order to make the WTRU 1210 receive the previously obtained RRP.

In a scenario where the AP 1205 sustains a level of interference much higher than the WTRUs 1210 at the range, this method of obtaining the RRP would make the AP 1205 transmit at a power higher than needed. Alternatively, the RRP may be reset to $RRP_{DS}$ (ignoring $RRP_{UI}$) after a minimum amount of time, e.g., several minutes, during which the $RRP_{UI}$ is constantly above the $RRP_{DS}$. Thereafter, $RRP_{UI}$ would be taken into consideration only upon bad downlink performance.

Although the features and elements of the present invention are described in the preferred embodiments in particular combinations, each feature or element can be used alone without the other features and elements of the preferred embodiments or in various combinations with or without other features and elements of the present invention.

List of itemized embodiments

1. A method implemented by each of a plurality of access points (APs) for autonomously determining their respective coverage areas of in a wireless communication system, the method comprising each AP:

    (a) receiving packets from other APs;
    (b) measuring the power level of said received packets;
    (c) estimating path losses from other APs using said measurements; and
    (d) calculating a range of the AP from said estimated path losses.

2. The method of item 1, whereby at least one of said received packets is a loud packet, said loud packet is being transmitted at a maximum power level of the AP.

3. The method of item 2 wherein each of the plurality of APs has different transmission time window for transmitting a loud packet.

4. The method of item 2 wherein the loud packet includes a special field indicating that the packet is a loud packet.

5. The method of item 2 wherein the AP exchanges messages indicating the transmission power level used for transmission of the loud packet.

6. The method of item 2 wherein the AP utilizes N largest received power levels in estimating a path loss from a particular AP.

7. The method of item 1 further comprising:

maintaining a list of other APs; determining whether a particular AP is
included in the list; and adding the particular AP to the list if the particular AP is not included in the list.

8. The method of item 7 further comprising the step of deleting an existing AP if no packet is received from the AP for a predetermined period of time.

9. The method of item 7 wherein a duration for measuring the received power of the packets are set differently for a new AP that is not included in the list of other APs.

10. The method of item 1 further comprising a step of selecting a reference AP, whereby the range is calculated based on path loss to the reference AP and a parameter defining a degree of overlapping of coverage area with the reference AP.

11. The method of item 10 wherein the reference AP is selected as an AP to which the path loss is an $N^{th}$ smallest.

12. An access point (AP) for autonomously determining its coverage area, the AP comprising a transceiver for transmitting loud packets to, and receiving loud packets from, other APs, the AP comprising:

a measurement unit for measuring received powers of the loud packets received from the other APs;
an estimation unit for estimating path losses from the other APs using the measured received powers; and
a range calculation unit for calculating the range of the AP from the estimated path losses from the other APs.

13. The AP of item 12 wherein each of the plurality of APs transmits the loud packet at a maximum power level of the AP.

14. The AP of item 12 wherein each of the plurality of APs has different transmission time window for transmitting the loud packet.

15. The AP of item 12 wherein the loud packet includes a special field indicating that the packet is a loud packet.

16. The AP of item 12 wherein the AP exchanges messages indicating the transmission power level used for transmission of the loud packet.

17. The AP of item 12 wherein the estimation unit utilizes N largest received power levels in estimating a path loss from a particular other AP.

18. The AP of item 12 further comprising:

a list of other APs; and
a controller for determining whether a particular AP is included in the list, and for adding the particular AP in the list if the particular AP is not included in the list.

19. The AP of item 18 wherein a duration for measuring the received power of the packets before calculating a path loss estimate is set differently for a new AP that is not included in the list of other APs.

20. The AP of item 18 wherein the controller deletes an existing AP if no packet is received from the AP for a predetermined period of time.

21. The AP of item 12 wherein the range calculation unit selects a reference AP, and calculates the range based on a path loss to the reference AP and a parameter defining a degree of overlapping of coverage area with the reference AP.

22. The AP of item 21 wherein the reference AP is selected as an AP to which the path loss is an $N^{th}$ smallest.

23. An integrated circuit (IC) included within an Access Point (AP) for autonomously determining a coverage area of the AP in a wireless communication system including a penalty of APs, the IC comprising:

> a transceiver for transmitting loud packets to, and receiving loud packets from, a plurality of other APs;
> a measurement unit for measuring received powers of the loud packets received from the other APs;
> an estimation unit for estimating path losses from the other APs using the measured received powers; and
> a range calculation unit for calculating a range of the AP from the estimated path losses from the other APs.

24. In a wireless communication system which includes a plurality of access points (APs) experiencing various loads, each AP being associated with at least one respective channel, a method of balancing the loads of the APs, the method comprising:

> (a) estimating and comparing the load of each AP and the channel utilization of other channels not used by the AP to certain thresholds;
> (b) increasing a range of a particular AP with a light load if the load on at least one channel used by another AP is heavy; and
> (c) decreasing a range of a particular AP with a heavy load if the load on all channels not used by the particular AP is light.

25. The method of item 24 wherein step (b) further comprises:

> (b1) obtaining a baseline range of the particular AP;
> (b2) calculating a range adjustment based on the results of the comparisons of step (a); and
> (b3) adding the range adjustment to the baseline range to increase the range of the particular AP.

26. The method of item 25 wherein the baseline range is based on path loss measurements.

27. The method of item 24 wherein step (c) further comprises:

> (c1) obtaining a baseline range of the particular AP;
> (c2) calculating a range adjustment based on the results of the comparisons of step (a); and
> (c3) adding the range adjustment to the baseline range to decrease the range of the particular AP.

28. The method of item 27 wherein the baseline range is based on path loss measurements.

29. The method of item 24 further comprising:

> (d) establishing an adjustment repeat period; and
> (e) repeating steps (a)-(c) according to the adjustment repeat period.

30. The method of item 24 wherein the wireless communication system includes a plurality of wireless transmit/receive units (WTBUs) that communicate with the APs, wherein if any particular one of the WTRUs is determined to have an out-of-range status, the particular WTRU is disassociated with its current serving AP, and any association request received from the particular WTRU is denied.

31. The method of item 24 wherein the wireless communication system is a wireless local area network (WLAN).

32. In a wireless communication system which includes a plurality of wireless transmit/receive units that communicate with a plurality of access points (APs) experiencing various loads, each AP being associated with at least one channel, a method of balancing the loads of the APs, the method comprising:

(a) estimating and comparing the load of each AP and the channel utilization of other channels not used by the AP to certain thresholds;
(b) obtaining at least one required received power (RRP) value associated with a minimum power level at which a particular type of packet transmitted by the particular AP is expected to be successfully received by a mobile station associated with the particular AP;
(c) determining an AP range adjustment value used to increase or decrease the range of the particular AP; and
(d) determining a transmission power level of the particular AP by summing the AP range adjustment values and the RRP value.

33. The method of item 32 wherein a first RRP value is established for beacon and probe response packets, and a second RRP value is established for data packets.

34. The method of item 32 wherein the RRP value is dependent upon a type and data rate of a transmitted packet.

35. The method of item 32 wherein the RRP value is obtained either directly using a manual configuration or by an automated process.

36. The method of item 32 wherein a range of a particular AP with a light load is increased if the load on at least one channel used by another AP is heavy.

37. The method of item 32 wherein a range of a particular AP with a heavy load is decreased if the load on all channels not used by the particular AP is light.

38. The method of item 32 wherein if any particular one of the WTRUs is determined to have an out-of-range status, the particular WTRU is disassociated with its current serving AP and any association request received from the particular WTRU is denied.

39. The method of item 32 wherein the wireless communication system is a wireless local area network (WLAN).

40. An access point (AP) having a varying load, the AP comprising:

(a) means for estimating and comparing the load of the AP and the channel utilization of other channels not used by the AP to certain thresholds;
(b) means for increasing a range of the AP if the load of the AP is substantially lighter than the load on at least one channel used by another; and
(c) means for decreasing a range of the AP if the load of the AP is substantially heavier than the load on all channels not used the AP.

41. The AP of item 40 wherein the means for increasing the range further comprises:

(b1) means for obtaining a baseline range of the AP;
(b2) means for calculating a range adjustment based on the results of the comparisons performed by the means for estimating and comparing; and
(b3) means for adding the range adjustment to the baseline range to increase the range of the particular AP.

42. The AP of item 41 wherein the baseline range is based on path loss measurements.

43. The AP of item 41 wherein the means for decreasing the range further comprises:

(c1) means for obtaining a baseline range of the AP;
(c2) means for calculating a range adjustment based on the results of the comparisons performed by the means for estimating and comparing; and
(c3) means for adding the range adjustment to the baseline range to decrease the range of the particular AP.

44. The AP of item 43 wherein the baseline range is based on path loss measurements.

45. The AP of item 40 further comprising:

(d) means for establishing an adjustment repeat period; and
(e) means for repeating the functions performed by the means for estimating and comparing, the means for increasing and the means for decreasing according to the adjustment repeat period.

46. An access point (AP) having a varying load, the AP comprising:

(a) means for estimating and comparing the load of the AP and the channel utilization of other channels not used by the AP to certain thresholds;
(b) means for obtaining at least one required received power (RRP) value associated with a minimum power level at which a particular type of packet transmitted by the particular AP is expected to be successfully received by a mobile station associated with the particular AP;
(c) means for determining an AP range adjustment value used to increase or decrease the range of the particular AP; and
(d) means for determining a transmission power level of the particular AP by summing the AP range adjustment values and the RRP value.

47. The AP of item 46 wherein a first RRP value is established for beacon and probe response packets, and a second RRP value is established for data packets.

48. The AP of item 46 wherein the RRP value is dependent upon a type and data rate of a transmitted packet.

49. The AP of item 46 wherein the RRP value is obtained either directly using a manual configuration or by an automated process.

50. The AP of item 46 wherein a range of a particular AP with a light load is increased if the load on at least one channel used by another AP is heavy.

51. The AP of item 46 wherein a range of a particular AP with a heavy load is decreased if the load on all channels not used by the particular AP is light.

52. In a wireless communication system which includes a plurality of access points (APs) experiencing various loads, a wireless transmit/receiving unit (WTRU) comprising:

(a) means for disassociating from a first one of the APs which decreases its baseline range because it is experiencing a relatively heavy load as compared to other ones of the APs; and
(b) means for associating with a second one of the APs which increases its baseline range because it is experiencing a relatively light load as compared to other ones of the APs.

53. The WTRU of item 52 wherein the wireless communication system is a wireless local area network (WLAN).

54. In a wireless communication system which includes a plurality of access points (APs) experiencing various loads, an integrated circuit (IC) comprising:

(a) means for disassociating from a first one of the APs which decreases its baseline range because it is experiencing a relatively heavy load as compared to other ones of the APs; and
(b) means for associating with a second one of the APs which increases its baseline range because it is experiencing a relatively light load as compared to other ones of the APs.

55. The IC of item 54 wherein the wireless communication system is a wireless local area network (WLAN).

56. The IC of item 54 wherein the IC is integrated into a wireless transmit/receive unit (WTRU).

57. In a wireless communication system including at least one access point (AP) and at least one wireless transmit/ receive unit (WTRU) associated with the AP, a method of determining a Minimum transmission power level of the AP, the method comprising:

(a) estimating an interference to the AP; and
(b) obtaining a required received power (RRP) of the WTRU based on the interference estimate of step (a).

58. The method of item 57 wherein the step (a) further comprises: (a1) executing a slow interference estimation process to estimate an interference during a relatively long period; and (a2) executing a fast interference estimation process to estimate an interference during a relatively short period.

59. The method of item 58 wherein step (a1) further comprises:

(i) analyzing transmitted data when a packet is transmitted to the WTRU;
(ii) recording the result of the analysis;
(iii) determining whether there is at least a low quality bin;
(iv) setting an RRP from downlink statistics ($RRP_{DS}$) to the same value of a previous activation minus some predetermined value, if there is no low quality bin; and
(v) setting the $RRP_{DS}$ to a received signal strength indicator (RSSI) value corresponding to the first bin above the highest low quality bin, if there is at least one low quality bin.

60. The method of item 59 wherein the low quality bin is a significant bin having an average data rate of successful transmission which is below a threshold and rate control enabled, or a percentage of successful transmissions is below a threshold.

61. The method of item 59 wherein step (a1) further comprises:

(vi) executing the slow interference estimation successively; and
(vii) recording an average of the result of the analysis cumulatively in the histogram.

62. The method of item 59 wherein the step (a1)(i) further comprises computing the average data range of successful transmissions and the percentage of successful transmissions perceived by WTRU.

63. The method of item 59 wherein $RRP_{DS}$ is set as a minimum value of RRP ($RRP_{min}$), if there is no low quality bin and there is no previous activation.

64. The method of item 58 wherein step (a2) further comprises:

(i) the AP performing a noise floor measurement based on a received signal strength indicator (RSSI);
(ii) determining whether the noise floor measurement is available in the absence of carrier lock;
(iii) setting an RRP from uplink interference ($RRP_{UI}$) to the value of a previous activation, if there is no available noise floor measurement available in the absence of carrier lock; and
(iv) setting the $RRP_{UI}$ to the following equation, $RRP_{UI} = I_{AP} + (C/I)_{req\_low}$, if the noise floor measurement is available, wherein $I_{AP}$ is an estimate of the noise floor at the AP, and $(C/I)_{req\_low}$ is a configurable parameter representing the typical required carrier-to-interference ratio to have a reasonable probability of success at a low rate.

65. The method of item 57 further comprising:

(c) obtaining a range of the AP; and
(d) determining the minimum transmission power level of the AP by summing the range of the AP obtained in step (c) and the RRP of the WTRU obtained in step (b).

66. The method of item 57 wherein the wireless communication system is a wireless local area network (WLAN).

67. In a wireless communication system including at least one access point (AP) and at least one wireless transmit/receive unit (WTRU) associated with the AP, a method of determining a minimum transmission power level of the AP, the method comprising:

(a) obtaining a range of the AP;

(b) estimating an interference to the AP;

(c) obtaining a required received power (RRP) of the WTRU based on the interference estimate of step (b); and

(d) determining the minimum transmission power level of the AP by summing the range of the AP obtained in step (a) and the RRP of the WTRU obtained in step (c).

68. The method of item 67 wherein step (b) further comprises:

(b1) executing a slow interfer3ence estimation process to estimate an interference during a relatively long period; and

(b2) executing a fast interference estimation process to estimate an interference during a relatively short period.

69. The method of item 67 wherein the wireless communication system is a wireless local area network (WLAN).

70. In a wireless communication system including at least one access point (AP) and at least one wireless transmit/receive unit (WTRU) associated with the AP, a method of determining a minimum transmission power level of the AP, the method comprising:

(a) obtaining a range of the AP;

(b) executing a slow interference estimation process to estimate an interference during a relatively long period;

(c) executing a fast interference estimation process to estimate an interference during a relatively short period;

(d) obtaining a required received power (RRP) of the WTRU based on the interference estimates determined by executing the slow interference estimation process and the fast interference estimation process; and

(e) determining the minimum transmission power level of the AP by summing the range of the AP obtained in step (a) and the RRP of the WTRU obtained in step (d).

71. The method of item 70 wherein the wireless communication system is a wireless local area network (WLAN).

72. An access point (AP) for determining a minimum transmission power level, the AP being associated with at least one wireless transmit/receive unit (WTRU), the AP comprising:

(a) means for obtaining a range of the AP;

(b) means for executing a slow interference estimation process to estimate an interference during a relatively long period;

(c) means for executing a fast interference estimation process to estimate an interference during a relatively short period;

(d) means for obtaining a required received power (RRP) of the WTRU based on the interference estimates determined by executing the slow interference estimation process and the fast interference estimation process; and

(e) means for determining the minimum transmission power level of the AP by summing the range of the AP and the RRP af the WTRU.

73. A wireless local area network (WLAN) including the AP of item 72.

74. An integrated circuit (IC) for determining a minimum transmission power level of an access point (AP), the AP being associated with at least one wireless transmit/receive unit (WTRU), the IC comprising:

(a) means for obtaining a range of the AP;

(b) means for executing a slow interference estimation process to estimate an interference during a relatively long period;

(c) means for executing a fast interference estimation process to estimate an interference during a relatively short period;

(d) means for obtaining a required received power (RRP) of the WTRU based on the interference estimates determined by executing the slow interference estimation process and the fast interference estimation process; and

(e) means for determining the minimum transmission power level of the AP by summing the range of the AP and the RRP of the WTRU.

75. The IC of item 74 wherein the IC is integrated into the AP.

76. A wireless local area network (WLAN) including the IC of item 74.

**Claims**

1. An access point, AP, comprising:

   a receiver configured to receive a received signal strength indicator, RSSI;
   a measuring unit electrically coupled to the receiver, the measuring unit configured to measure external interference at the AP based on data received via the receiver; and an analyzing unit electrically coupled to the measurement unit, the analyzing unit configured to perform a noise floor measurement based on the RSSI, determine whether the noise floor measurement is available in the absence of carrier lock, set a required received power, RRP, from uplink interference, $RRP_{UI}$, to the value of a previous activation, if there is no available noise floor measurement available in the absence of carrier lock, and set the $RRP_{UI}$ in accordance with the following equation, $RRP_{UI} = I_{Ap} + (C/I)_{req\_low}$, if the noise floor measurement is available, wherein $I_{AP}$ is an estimate of the noise floor at the AP, and $(C/I)_{req\_low}$ is a configurable parameter representing the typical required carrier-to-interference ratio to have a reasonable probability of success at a low rate.

2. The AP of claim 1 further comprising:

   a transmitter configured to transmit transmission parameters to a wireless transmit/receive unit (WTRU); and
   a function generator electrically coupled to the analyzing unit and the transmitter, the function generator being configured to provide the RRP and minimum transmission parameters to the transmitter, as determined by the analyzing unit.

3. An access point, AP, comprising:

   a receiver configured to receive a received signal strength indicator (RSSI);
   a measuring unit electrically coupled to the receiver, the measuring unit configured to measure external interference at the AP based on data received via the receiver; and an analyzing unit electrically coupled to the measuring unit, the analyzing unit configured to perform a noise floor measurement based on a received signal strength indicator, RSSI, and set the required received power, RRP, from uplink interference, $RRP_{UI}$ in accordance with the following equation, $RRP_{UI} = I_{AP} + (C/I)_{req\_low}$, wherein $I_{AP}$ is an estimate of the noise floor at the AP, and $(C/I)_{req\_low}$ is a configurable parameter representing the typical required carrier-to-interference ratio to have a reasonable probability of success at a low rate.

4. The AP of claim 3 further comprising:

   a transmitter configured to transmit transmission parameters to a wireless transmit/receive unit, WTRU; and
   a function generator electrically coupled to the analyzing unit and the transmitter, the function generator being configured to provide the RRP and minimum transmission parameters to the transmitter, as determined by the analyzing unit.

5. An access point, AP, comprising:

   a receiver configured to receive a received signal strength indicator, RSSI;
   a measuring unit electrically coupled to the receiver, the measuring unit configured to measure external interference at the AP based on data received via the receiver; and
   an analyzing unit electrically coupled to the measuring unit, the analyzing unit configured to perform a noise floor measurement based on the RSSI, and set a required received power, RRP, from uplink interference, $RRP_{UI}$, to the value of a previous activation, if there is no available noise floor measurement available in the absence of carrier lock.

6. The AP of claim 5 further comprising:

   a transmitter configured to transmit transmission parameters to a wireless transmit/receive unit, WTRU; and
   a function generator electrically coupled to the analyzing unit and the transmitter, the function generator being configured to provide the RRP and minimum transmission parameters to the transmitter, as determined by the

analyzing unit.

**FIG.1**

*200*

START

EACH AP TRANSMITS AND RECEIVES LOUD PACKETS TO AND FROM NEIGHBORING APs. —202

EACH AP MEASURES RECEIVED POWERS OF THE LOUD PACKETS RECEIVED FROM NEIGHBOR APs. —204

EACH AP ESTIMATES PATH LOSSES FROM THE NEIGHBORING APs. —206

EACH AP CALCULATES A RANGE OF THE AP FROM THE ESTIMATED PATH LOSSES FROM THE NEIGHBORING APs. —208

END

**FIG. 2**

<u>300</u>

START

SET TRANSMISSION POWER LEVEL TO P. — 302

PICK A UNIFORM RANDOM NUMBER (C) BETWEEN - 1 AND 1. — 304

COMPUTE $T_{lpg} = T_{lpg\_fix} + C \times T_{lpg\_var}$ AND SET TIMER TO $T_{lpg}$. — 306

308
$T_{lpg}$ EXPIRED AND NO PACKET IS BEING TRANSMITTED?

NO

YES

310
IS THERE AN ELIGIBLE PACKET ?

NO

YES

SET TRANSMISSION POWER LEVEL TO $P_{max}$. — 312

TRANSMIT THE PACKET AND OPTIONALLY SET TIMER TO $T_{max\_lpdur}$. — 314

316
PACKET TRANSMISSION COMPLETED OR $T_{max\_lpdur}$ EXPIRED?

NO

YES

*FIG. 3*

**FIG. 4**

400

START PATH LOSS ESTIMATION PERIOD.

FOR ALL EXISTING APs, CLEAR MEMORY OF THE RECEIVED POWER LEVELS OF THE $N_{srp}$ PACKETS. SET TIMER $T_{ple}$. —402

NO ← 408 PACKET RECEIVED FROM AN AP?

NO ← 406 HAS A TIMER $T_{fple}$ FOR A NEW AP BEEN SET AND EXPIRED?

NO ← 404 TIMER $T_{ple}$ EXPIRED?

YES

412 → UPDATE PATH LOSS ESTIMATES OF EXISTING APs.

YES

410 → COMPUTE PATH LOSS ESTIMATE FOR THE NEW AP. MOVE AP FROM LIST OF NEW APs TO LIST OF EXISTING APs.

413 → END PATH LOSS ESTIMATION PERIOD.

414 → AP IN LIST OF EXISTING APs OR IN LIST OF NEW APs?

NO → SET TIMER $T_{fple}$ FOR THIS AP. ADD AP TO LIST OF NEW APs. —416

YES

418 → RECEIVED POWER FROM PACKET IS ONE OF THE $N_{srp}$ LARGEST FROM THIS AP?

NO

YES

RECORD RECEIVED POWER IN MEMORY OF $N_{rsp}$ LARGEST RECEIVED POWER LEVELS FOR THIS AP. —420

500

```
                    ┌─────────┐
                    │  START  │
                    └────┬────┘
                         ▼
   ┌──────────────────────────────────────────────┐
   │   EACH AP CALCULATES AN AVERAGE (AVE) OF      │
   │   THE POWER LEVELS OF THE Nsrp PACKETS.       │──── 502
   └──────────────────────┬───────────────────────┘
                          ▼
   ┌──────────────────────────────────────────────┐
   │   THE AP CALCULATES A PATH LOSS ESTIMATE      │
   │   ACCORDING TO THE FOLLOWING EQUATION:        │──── 504
   │   PATH LOSS = Pmax − AVE.                     │
   └──────────────────────┬───────────────────────┘
                          ▼
   ┌──────────────────────────────────────────────┐
   │   THE AP CALCULATES AN AVERAGE OF THE PATH    │
   │   LOSSES FOR LAST Naplp ESTIMATIONS           │──── 506
   │   (OPTIONAL).                                 │
   └──────────────────────┬───────────────────────┘
                          ▼
                    ┌─────────┐
                    │   END   │
                    └─────────┘
```

**FIG. 5**

600

```
                    ┌─────────┐
                    │  START  │
                    └────┬────┘
                         ▼
   ┌──────────────────────────────────────────────┐
   │ CHOOSE A REFERENCE AP IN THE SET OF           │── 602
   │ IDENTIFIED APs                                │
   └──────────────────────┬───────────────────────┘
                          ▼
   ┌──────────────────────────────────────────────┐
   │ CALCULATE A RANGE OF THE LISTENING AP         │
   │ ACCORDING TO THE FOLLOWING EQUATION:          │── 604
   │ RANGE = Lref - Kbackoff.                      │
   └──────────────────────┬───────────────────────┘
                          ▼
                    ┌─────────┐
                    │   END   │
                    └─────────┘
```

**FIG. 6**

712                                              102

```
   ┌─────────────────────────────────────────────────────┐
   │   ┌──────────────┐   ┌──────────┐                    │
   │   │   RANGE      │   │  MEMORY  │   ┌──────────────┐  │
708│   │ CALCULATION  │   └──────────┘   │ TRANSCEIVER  │  │─ 702
   │   │    UNIT      │                  └──────────────┘  │
   │   └──────────────┘   ┌──────────┐                     │
   │                      │          │                     │
   │   ┌──────────────┐   │CONTROLLER│   ┌──────────────┐  │
706│   │ ESTIMATION   │   │          │   │ MEASUREMENT  │  │
   │   │    UNIT      │   └──────────┘   │    UNIT      │  │─ 704
   │   └──────────────┘                  └──────────────┘  │
   └─────────────────────────────────────────────────────┘
```

**FIG. 7**                    710

**FIG. 8**

EP 2 053 884 A2

START

900

OBTAIN THE BASELINE RANGE (RNGbase) PARAMETER OF AN ACCESS POINT (AP). — 905

ESTIMATE AND COMPARE THE LOAD OF THE AP AND THE CHANNEL UTILIZATION ON OTHER CHANNELS NOT USED BY THE AP TO CERTAIN THRESHOLDS. — 910

SET A RANGE ADJUSTMENT (RNGadj) PARAMETER IN ORDER TO INCREASE OR DECREASE THE RANGE BASED ON THE RESULTS OF THE COMPARISONS PERFORMED IN STEP 910. — 915

DETERMINE AN ADJUSTED AP RANGE BY SUMMING RNGbase AND RNGadj. — 920

OBTAIN THE REQUIRED RECEIVED POWER (RRP). — 925

DETERMINE THE TRANSMISSION POWER LEVEL OF THE AP BY SUMMING THE ADJUSTED AP RANGE DETERMINED IN STEP 920 AND THE RRP OBTAINED IN STEP 925. — 930

END

**FIG. 9**

**FIG. 10**

**FIG. 11**

1200

1220 ― 1205

TRANSMITTER ─ RECEIVER ─ 1215

WTRU ─ 1210

MEASURING UNIT ─ 1225

ANALYZING UNIT ─ 1230

FUNCTION GENERATOR ─ 1235

ACCESS POINT (AP)

**FIG. 12**

1300

START

OBTAIN RANGE OF ACCESS POINT (AP). ─ 1305

ESTIMATE INTERFERENCE TO THE AP. ─ 1310

OBTAIN THE REQUIRED RECEIVED POWER (RRP) OF THE WTRU FROM THE INTERFERENCE ESTIMATION PERFORMED IN STEP 1310. ─ 1315

DETERMINE THE MINIMUM TRANSMISSION POWER LEVEL OF THE AP BY SUMMING THE RANGE OF THE AP OBTAINED IN STEP 1305 AND THE RRP OBTAINED IN STEP 1315. ─ 1320

END

**FIG. 13**

START

1400

A PLURALITY OF PACKETS ARE TRANSMITTED TO
ONE OR MORE WTRUs OVER A TIME PERIOD $T_{DS}$. —1410

ANALYZE THE TRANSMITTED PACKETS AND RECORD
THE RESULTS IN THE $H_r$ AND $H_S$ HISTOGRAMS. —1420

1430

IS
THERE AT LEAST
ONE LOW QUALITY
BIN?

NO          YES

1440                                          1450

SET $RRP_{DS}$ TO THE SAME
VALUE USED IN THE
PREVIOUS ACTIVATION, MINUS
$N_b$ TIMES THE BIN WIDTH.

SET $RRP_{DS}$ TO THE RSSI
VALUE CORRESPONDING TO
THE FIRST BIN ABOVE THE
HIGHEST LOW QUALITY BIN.

*FIG. 14*

END

START

1500

AP MEASURES NOISE FLOOR (E.G., RSSI) IN
THE ABSENCE OF CARRIER LOCK. —1510

1520

IS A NOISE
FLOOR MEASUREMENT
AVAILABLE DURING THE MEASUREMENT
PERIOD, IN THE ABSENCE OF
CARRIER LOCK
?

YES          NO          1540

1530

$RRP_{UI} = I_{AP} + (C/I)_{req\_low}$

$RRP_{UI}$ IS LEFT TO THE VALUE
IT WAS SET TO AT THE PREVIOUS
ACTIVATION, OR $RRP_{min}$ IF THIS
IS THE FIRST ACTIVATION.

*FIG. 15*

END